# EUROPÄISCHE PATENTSCHRIFT

(11) **EP 3 468 436 B1**
(45) Veröffentlichungstag und Bekanntmachung des Hinweises auf die Patenterteilung: **17.04.2024**
(21) Anmeldenummer: 17732801.0
(22) Anmeldetag: 08.06.2017
(51) Int. Cl.: A47J 43/07, A47J 27/00, A47J 27/62

(54) **VERFAHREN ZUM BETREIBEN EINER KÜCHENMASCHINE**
METHOD FOR OPERATING A FOOD PROCESSOR
PROCÉDÉ POUR FAIRE FONCTIONNER UN ROBOT MÉNAGER

(30) Priorität: 10.06.2016 DE 102016110715
(43) Veröffentlichungstag der Anmeldung: 17.04.2019
(73) Patentinhaber: Vorwerk & Co. Interholding GmbH, 42270 Wuppertal (DE)
(72) Erfinder: RESENDE, Maria, 1500-431 Lissabon (PT); YAN, Wenjie, 40476 Düsseldorf (DE)
(74) Vertreter: Bals & Vogel Patentanwälte PartGmbB
(86) Internationale Anmeldenummer: PCT/EP2017/064000
(87) Internationale Veröffentlichungsnummer: WO 2017/211975

(56) Entgegenhaltungen:
- WO-A1-2014/016117
- WO-A1-2016/016337

## Beschreibung

Die vorliegende Erfindung betrifft ein Verfahren gemäß der im Oberbegriff des Anspruchs 1 näher definierten Art. Ferner bezieht sich die Erfindung auf eine Küchenmaschine sowie auf ein Computerprogrammprodukt und eine Verwendung einer Küchenmaschine.

Aus dem Stand der Technik sind Küchenmaschinen bekannt, welche zumindest teilweise automatisch Lebensmittel zubereiten können. Insbesondere sind entsprechende Küchenmaschinen und Verfahren zu deren Betrieb in der WO 2016/016337 A1 und in der WO 2014/016117 A1 beschrieben. Eine weitere derartige Küchenmaschine ist bspw. in der Schrift DE 10 2013 106 691 A1 gezeigt.

Eine derartige Küchenmaschine umfasst eine oder mehrere Bearbeitungsvorrichtungen, welche bspw. ein Rührwerk aufweisen. Die Bearbeitungsvorrichtung kann dabei derart angesteuert werden, dass eine selbstständige und/oder zumindest teilweise automatische Zubereitung möglich ist. Dies umfasst insbesondere auch die Abarbeitung von Rezeptschritten durch die Küchenmaschine.

Die zumindest teilweise automatische Zubereitung erfolgt dabei insbesondere gemäß einer Programmierung der Küchenmaschine. Die Programmierung umfasst bspw. Vorgaben, wie konkrete Einstellungen für Ansteuerungsparameter, welche in Abhängigkeit von Rezeptschritten (Zubereitungsschritten) und/oder der Bedienereinstellung festgelegt werden. Ferner ist es denkbar, dass die Vorgaben in Abhängigkeit von dem zuzubereitenden Lebensmittel angepasst werden. So erfordert bspw. die Zubereitung von Reis eine andere Rührwerksdrehzahl und zeitliche Rührdauer als die Zubereitung von Sahne. Die Art des Lebensmittels wird bspw. durch das Rezept oder durch den Bediener der Küchenmaschine vorgegeben und an der Küchenmaschine entsprechend eingestellt. In Abhängigkeit von der Art des Lebensmittels erfolgt dann die Zubereitung entsprechend einer vorgegebenen Rührdauer und/oder Rührwerksdrehzahl, welche für die Zubereitung des jeweiligen Lebensmittels optimal ist.

Auch können die Vorgaben verschiedene Zubereitungsschritte umfassen, welche z. B. jeweils Informationen über die Art und/oder Menge und/oder Zubereitung von Lebensmitteln aufweisen. Die Durchführung der Zubereitungsschritte dient dabei der Zubereitung der Lebensmittel in einer bestimmten Art und Weise, insbesondere durch eine bestimmte Einstellung der Ansteuerungsparameter, sodass möglichst ein vorbestimmtes Zubereitungsergebnis gewährleistet wird.

Allerdings ist hierbei oft ein Problem, dass die optimale Zubereitung und damit die optimalen Werte für die Ansteuerungsparameter, wie die Rührwerksdrehzahl und/oder die Rührdauer, von sehr vielen Faktoren abhängig sind und von diesen beeinflusst werden. Solche Faktoren sind bspw. die Lebensmitteleigenschaften (Menge, Fettprozent, Hersteller und dergleichen) und/oder die Umgebungsbedingungen (wie die Raumtemperatur). Um die optimalen Werte für die Ansteuerungsparameter zu bestimmen, reicht es daher oft nicht aus, in Abhängigkeit von einer eingestellten Lebensmittelart, d. h. lebensmittelabhängig, vorgespeicherte Werte für die Ansteuerungsparameter heranzuziehen. Insbesondere ist es dann oft nicht möglich, bei unterschiedlichen Voraussetzungen und Umgebungsbedingungen gute und vergleichbare Ergebnisse der Zubereitung zu erhalten. Die Berücksichtigung von nur vereinzelten Faktoren ist dabei aus technischer Sicht oft nicht ausreichend.

Ferner ist ein Problem, dass die Zubereitung mittels der Küchenmaschine, auch wenn sie zumindest teilautomatisiert verläuft, nur begrenzt anpassungsfähig und optimierbar ist. Einflussfaktoren, z. B. Eigenschaften der Lebensmittel, welche die Zubereitung beeinflussen, lassen sich dabei oft nur ungenügend berücksichtigen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und/oder vereinfachte, zumindest teilweise automatische Zubereitung von Lebensmitteln zu ermöglichen. Weiter soll insbesondere eine Zubereitung durch die Küchenmaschine für ein für die Zubereitung vorgesehenes Lebensmittel, d. h. insbesondere die Ermittlung und/oder Festlegung der optimalen Ansteuerungsparameter für das jeweilige Lebensmittel, in Bezug auf den Zustand und/oder die Art des Lebensmittels verbessert werden. Insbesondere soll dabei der konstruktive Aufwand und/oder Kostenaufwand reduziert werden und/oder die Anpassungsfähigkeit und Automatisierbarkeit der Küchenmaschine für verschiedene Zubereitungen erhöht werden.

Die voranstehende Aufgabe wird gelöst durch ein Verfahren mit den Merkmalen des Anspruchs 1, durch eine Küchenmaschine mit den Merkmalen des Anspruchs 11 sowie durch ein Computerprogrammprodukt mit den Merkmalen des Anspruchs 14 und durch eine Verwendung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Küchenmaschine sowie dem erfindungsgemäßen Computerprogrammprodukt und der erfindungsgemäßen Verwendung, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Verfahren zum Betreiben einer Küchenmaschine, wobei vorzugsweise in einem Zubereitungsbetrieb mindestens eine Bearbeitungsvorrichtung der Küchenmaschine zur zumindest teilweise automatischen (d. h. insbesondere zumindest teilweise ohne manuelle Steuerung der Zubereitung, z. b. durch automatisches Regeln und/oder Überwachen einer Temperatur eines Heizelements und/oder durch eine automatisierte Rezeptabarbeitung durch die Küchenmaschine) Zubereitung von mindestens einem und/oder verschiedener Lebensmittel angesteuert wird. Diese Ansteuerung erfolgt bspw. durch eine Steuerungsvorrichtung und/oder durch ein Steuerungssignal, welches von der Steuerungsvorrichtung und/oder von einer Verarbeitungsvorrichtung ausgegeben wird.

Ferner sind vorzugsweise die nachfolgenden Schritte vorgesehen, welche insbesondere zeitlich nacheinander oder in beliebiger Reihenfolge durchgeführt werden:
a) Ermitteln von mindestens einem Ansteuerungswert durch eine erste Erfassung von mindestens einem Ansteuerungsparameter während des Zubereitungsbetriebs, wobei der Ansteuerungsparameter für die Zubereitung spezifisch ist,
b) Ermitteln von mindestens einem Ergebniswert durch eine zweite Erfassung von mindestens einem Ergebnisparameter, wobei der Ergebnisparameter für die Zubereitung und/oder das Ergebnis der Zubereitung spezifisch ist,
c) Aufzeichnen des Ansteuerungswertes und des Ergebniswertes in einer Zubereitungsaufzeichnung, sodass diese (die Zubereitungsaufzeichnung) der Zubereitung (als eine aufgezeichnete Zubereitung) zugeordnet ist, und/oder um die beendete Zubereitung als eine aufgezeichnete Zubereitung aufzuzeichnen. Insbesondere ist somit die beendete Zubereitung eine aufgezeichnete Zubereitung, wenn hierzu eine zugeordnete Zubereitungsaufzeichnung existiert. Die Aufzeichnung gemäß Schritt c) erfolgt vorzugsweise vor und/oder bei und/oder nach einer Beendigung der Zubereitung. Bevorzugt wird die Zubereitungsaufzeichnung digital in einer Datenspeichereinheit, wie einem Flash-Speicher, gespeichert.

Dies hat insbesondere den Vorteil, dass die weiteren Zubereitungen anhand der Zubereitungsaufzeichnung durchführbar und/oder anpassbar sind und/oder an die aufgezeichnete Zubereitung angleichbar sind. Vorzugsweise können somit z. B. zur Optimierung der Zubereitungen Umgebungsbedingungen Berücksichtigung finden, da der Ergebnisparameter (durch welchen bspw. das qualitative Ergebnis der Zubereitung beurteilbar ist) von den Umgebungsbedingungen abhängig ist. Somit lassen sich bspw. bei weiteren Durchführungen von Zubereitungen die durch die Erfassung gewonnenen Erkenntnisse mittels der Zubereitungsaufzeichnung nutzen, um eine anpassbare Zubereitung und eine hohe Qualität zu gewährleisten. Es kann vorzugsweise vorgesehen sein, dass bei Schritt a) der mindestens eine Ansteuerungswert einem ersten Erfassungswert entspricht und/oder bei Schritt b) der mindestens eine Ergebniswert einem zweiten Erfassungswert entspricht.

Insbesondere werden gemäß Schritt a) mehrere Ansteuerungswerte für mehrere unterschiedliche Ansteuerungsparameter ermittelt, z. B. für die Drehzahl und/oder die Temperatur und/oder die Drehrichtung und/oder Kombinationen davon. Ferner werden vorzugsweise gemäß Schritt b) mehrere Ergebniswerte für mehrere unterschiedliche Ergebnisparameter ermittelt, z. B. durch einen oder mehreren Sensoren an der Küchenmaschine oder dergleichen. Insbesondere bilden die Ergebniswerte einen zeitlichen Verlauf der durch den Sensor / die Sensoren ermittelten Werte.

Der Ansteuerungsparameter ist dabei z. B. dadurch spezifisch für die Zubereitung, dass hierdurch die direkte Verarbeitung des Lebensmittels angepasst und/oder gesteuert wird (z. B. durch die Einstellung der Drehzahl und/oder Temperatur, welche jeweils Ansteuerungsparameter sein können). Der Ergebnisparameter ist z. B. dadurch spezifisch für das Ergebnis der Zubereitung, dass hierdurch bspw. ein (zukünftiger geschätzter oder tatsächlicher) Fertigstellungszeitpunkt bestimmt wird und/oder der Zubereitungsbetrieb beendet wird (z. B. durch eine Bedienereingabe, welche das Rührwerk deaktiviert) und/oder die Qualität der Zubereitung und/oder das Lebensmittel selbst beurteilt wird (z. B. durch eine Temperatur- und/oder visuellen Erfassung am Lebensmittel und/oder durch eine Bedienereingabe, welche insbesondere das Ergebnis bewertet). Mit anderen Worten dient der Ergebnisparameter insbesondere zur Beeinflussung und/oder Beurteilung des Ergebnisses der Zubereitung. Somit kann der Ergebnisparameter bspw. auch das (oder ein bestimmtes Beendigungs-) Steuerungssignal betreffen und/oder die (bzw. eine bestimmte Beurteilungs-) Bedienereingabe und/oder den Ansteuerungsparameter, sofern diese die Beendigung und/oder das Ergebnis der Zubereitung oder eines einzelnen Zubereitungsschrittes bestimmen und/oder beeinflussen. Insbesondere ist auch dann der Ergebnisparameter allerdings unterschiedlich vom Ansteuerungsparameter ausgeführt.

Bevorzugt kann es möglich sein, dass anhand der Zubereitungsaufzeichnung eine, insbesondere automatische oder teilautomatische, Anpassung der Zubereitung erfolgt, sodass die Zubereitung abhängig von einem Zubereitungsergebnis durchgeführt wird. Hierzu kann insbesondere aus der Zubereitungsaufzeichnung ein gewünschtes / vorgegebenes Zubereitungsergebnis bestimmt werden. Bspw. kann anhand des aufgezeichneten Ergebniswertes das Zubereitungsergebnis, insbesondere ein zukünftiger Fertigstellungszeitpunkt, oder dergleichen bestimmt werden. Vorzugsweise erfolgt die Bestimmung des Zubereitungsergebnisses anhand einer Optimierungsvorgabe, insbesondere anhand eines Optimierungsalgorithmus. Auch kann es möglich sein, dass die Zubereitungsaufzeichnung noch weitere Informationen umfasst, welche zur Bestimmung des Zubereitungsergebnisses dienen. Diese weiteren Informationen werden z. B. anhand von Sensorerfassungen der Küchenmaschine ermittelt und/oder bei Schritt c) aufgezeichnet (z. B. Kameradaten oder dergleichen). Das Zubereitungsergebnis ist bspw. eine bestimmte Konsistenz oder eine bestimmte sonstige Eigenschaft des mindestens einen zubereiteten Lebensmittels. Inbesondere kann dann eine Anpassung der Ansteuerungsparameter in der Weise erfolgen, dass ein tatsächliches Ergebnis der Zubereitung möglichst nahe an das vorgegebene Zubereitungsergebnis kommt. Somit ist insbesondere die Zubereitung vorzugsweise nicht (zumindest nicht ausschließlich) abhängig von der Zeit, sondern (auch) von dem Zubereitungsergebnis. Mithin sind insbesondere auch die Zubereitungsschritte und/oder deren Abfolge und/oder Zeitdauer vorzugsweise nicht (nur) abhängig von der Zeit, sondern (auch) von dem Zubereitungsergebnis.

Es kann möglich sein, dass zum Starten einer weiteren Zubereitung, welche zumindest teilweise automatisch durch die Küchenmaschine durchgeführt wird, auch eine Zubereitungsaufzeichnung geladen wird. Die weitere Zubereitung erfolgt dann insbesondere derart, dass die Zubereitungsschritte anhand der Zubereitungsaufzeichnung dadurch angepasst werden, dass der mindestens eine aufgezeichnete Ergebniswert und/oder der mindestens eine aufgezeichnete Ansteuerungswert und/oder das mindestens eine Zubereitungsergebnis während der Zubereitung zur Auswertung herangezogen werden. Die Auswertung wird bspw. durch eine Verarbeitungsvorrichtung der Küchenmaschine durchgeführt. Die Auswertung erfolgt z. B. dadurch, dass zumindest teilweise während der Zubereitung mindestens ein ermittelter Ist-Wert der Ansteuerungsparameter und/oder mindestens ein Erfassungswert in Abhängigkeit von dem mindestens einen aufgezeichneten Ergebniswert und/oder dem mindestens einen aufgezeichneten Ansteuerungswert und/oder dem mindestens einen Zubereitungsergebnis ausgewertet und darauf basierend ein neuer Soll-Wert für die Ansteuerungsparameter ermittelt wird. Auf Grundlage des ermittelten SollWertes kann dann bspw. ein Steuerungssignal ausgegeben werden, sodass die Zubereitung an die Zubereitungsaufzeichnung angepasst wird. Die Auswertung erfolgt vorzugsweise anhand einer Optimierungsvorgabe (bspw. Optimierungsalgorithmen), welche z. B. lokal oder entfernt (d. h. auf einem entfernten Rechner) gespeichert ist und/oder abgerufen wird.

Insbesondere beeinflusst das Steuerungssignal den mindestens einen Ansteuerungsparameter der Zubereitung, sodass bevorzugt durch die Steuerungsvorrichtung die Ansteuerungsparameter, wie die Rührwerksdrehzahl und/oder Rührdauer, bestimmt und/oder kontrolliert und/oder gesteuert und/oder angepasst werden können. Es kann vorgesehen sein, dass zunächst zur Aufzeichnung der Zubereitung ein (erster) Zubereitungsbetrieb und/oder die Aufzeichnung aktiv durch den Bediener der Küchenmaschine initiiert wird, um daraufhin zumindest teilweise und/oder wiederholt und/oder zyklisch die Schritte a) bis c) des erfindungsgemäßen Verfahrens durchzuführen. Nach der Initiierung, z. B. durch die Auswahl eines Rezeptes und/oder durch eine Eingabe des Benutzers an der Küchenmaschine, kann insbesondere anschließend die Zubereitung als aufzuzeichnende Zubereitung dadurch aufgezeichnet werden, dass gemäß Schritt a) und b) der Ansteuerungswert bzw. der Ergebniswert ermittelt und gemäß Schritt c) aufgezeichnet (z. B. gespeichert) wird. Die Beendigung der Aufzeichnung und/oder der aufzuzeichnenden Zubereitung wird bspw. durch das Rezept und/oder durch die Eingabe des Bedieners vorgegeben. Dieses Beendigungsereignis, d. h. die Beendigung der Aufzeichnung und/oder der aufzuzeichnenden Zubereitung, stellt bspw. einen Ergebnisparameter dar und/oder kann anhand des Ergebniswertes ermittelt werden. Nach der Beendigung erfolgt z. B. eine persistente Abspeicherung der Zubereitungsaufzeichnung und/oder die Speicherung weiterer Informationen (z. B. über die Rezeptauswahl), wodurch vorzugsweise die Zubereitungsaufzeichnung der aufgezeichneten Zubereitung zugeordnet wird.

Insbesondere umfassen die Ansteuerungsparameter mindestens einen der folgenden (Verarbeitungs-) Parameter:
- Temperatur (insbesondere zur regulierten Ansteuerung einer Heizleistung eines Heizelementes der Küchenmaschine),
- Rührwerksdrehzahl,
- Rührdauer,
- Eine elektrische Größe an der Küchenmaschine, insbesondere einen Motorstrom der Küchenmaschine,
- Rührrichtung (Links- oder Rechtslauf),
- Aktivierung einer Aufforderung an den Bediener, z. B. einer bestimmten Anzeige auf einem Display,
- Eine erfassbare / messbare Größe, welche von mindestens einem Sensor der Küchenmaschine erfassbar ist,
- Zubereitungsdauer, z. B. auch die Gesamtzubereitungsdauer oder die Zubereitungsdauer einzelner Zubereitungsschritte,
- zumindest eine Erfassungsgröße und/oder zumindest einen Zubereitungsparameter.

Insbesondere umfasst der Ergebnisparameter zumindest einen der nachfolgenden Parameter:
- eine Bedienereingabe (Benutzereingabe) zur manuellen Beendigung eines Zubereitungsschrittes und/oder des Zubereitungsbetriebs,
- eine Bedienereingabe zur Beurteilung des Ergebnisses, insbesondere einer Qualität der Zubereitung und/oder des Lebensmittels,
- eine physikalische und/oder messbare Größe an der Küchenmaschine, welche Rückschlüsse über die Qualität der Zubereitung und/oder die Temperatur (an oder in der Küchenmaschine) und/oder die Drehzahl (eines Rührwerks) und/oder die Eigenschaften des Lebensmittels und/oder weitere Eigenschaften einer Bearbeitungsvorrichtung der Küchenmaschine bieten,
- ein Ereignis, insbesondere ein Beendigungsereignis, und/oder eine Information aus einer Rezeptinformation, welche(s) zur automatischen Beendigung des Zubereitungsschrittes und/oder des Zubereitungsbetriebs führt,
- zumindest eine Erfassungsgröße und/oder zumindest einen Zubereitungsparameter.

Die Zubereitung kann dabei bspw. ein oder mehrere Zubereitungsschritte (mit jeweils ein oder mehreren oder unterschiedlichen Lebensmittel) umfassen, wobei insbesondere die zeitliche Dauer der einzelnen Zubereitungsschritte jeweils als Zubereitungsdauer und die zeitliche Dauer der gesamten Zubereitung als Gesamtzubereitungsdauer bezeichnet wird.

Optional kann es vorgesehen sein, dass zumindest die nachfolgenden Schritte nach Schritt c) durchgeführt werden:
d) Auswerten der Zubereitungsaufzeichnung, wenn ein weiterer Zubereitungsbetrieb für eine weitere Zubereitung initiiert wird, vorzugsweise durch eine Bedienereingabe, insbesondere durch eine Rezeptauswahl, und/oder nach und/oder während der Durchführung der weiteren Zubereitung,
e) Ausgeben von mindestens einem Steuerungssignal zur Beeinflussung des weiteren Zubereitungsbetriebs, welcher insbesondere zuvor initiiert wurde, in Abhängigkeit von der Zubereitungsaufzeichnung und/oder der Auswertung (gemäß Schritt d)), sodass insbesondere die weitere Zubereitung in diesem weiteren Zubereitungsbetrieb an die Zubereitungsaufzeichnung angepasst erfolgt.

Vorzugsweise dienen die Schritte d) und e) zur Reproduktion der Aufzeichnung gemäß Schritt c) und/oder eines aufgezeichneten Verlaufs der Ansteuerungs- und/oder Ergebniswerte und/oder des Ergebnisses der aufgezeichneten Zubereitung. Bspw. kann das Ergebnis der aufgezeichneten Zubereitung ein (benutzerspezifischer) Zustand des Lebensmittels, wie eine Konsistenz (z. B. von Sahne, Saucen oder dergleichen), ein Mahlgrad (bspw. von Körnern oder dergleichen) oder ein Röstgrad (bspw. von Zwiebeln oder dergleichen), sein, welcher insbesondere durch die weitere Zubereitung reproduziert wird. Hierzu ist es denkbar, dass die Zubereitungsschritte zur Erzielung des Ergebnisses bei der weiteren Zubereitung sich von den Zubereitungsschritten der aufgezeichneten Zubereitung unterscheiden, sodass insbesondere (lediglich) das Ergebnis reproduziert wird. Alternativ oder zusätzlich kann die Zubereitungsaufzeichnung auch zur Reproduktion der einzelnen Zubereitungsschritte, insbesondere auch des aufgezeichneten Verlaufes, und somit des vollständigen Rezeptes dienen. Damit lassen sich bspw. bestehende Rezepte modifizieren und/oder neue Rezepte einfach und zuverlässig aufzeichnen.

Bevorzugt kann es vorgesehen sein, dass die Auswertung erfolgt, um ein Ergebnis einer weiteren Zubereitung mit dem aufgezeichneten Ergebniswert zu vergleichen. Insbesondere kann hierdurch eine zumindest teilweise automatische Anpassung der Zubereitungsschritte erfolgen, um z. B. das Ergebnis der aufgezeichneten Zubereitung durch die weitere Zubereitung zu reproduzieren. Die Anpassung erfolgt insbesondere automatisch, d. h. dass keine aktive Bedienereingabe und/oder manuelle Steuerung (zur Anpassung) notwendig ist. Insbesondere kann dabei die Anpassung derart erfolgt, dass nicht die Zubereitungsschritte anhand der Zubereitungsaufzeichnung identisch reproduziert werden, sondern die Zubereitungsschritte (möglicherweise abweichend von der Aufzeichnung) so angepasst werden, dass das Ergebnis der aufgezeichneten Zubereitung erzielt bzw. reproduziert wird. Hierzu erfolgt bspw. eine wiederholte Überwachung und/oder erneute Erfassung des Ergebnisparameters bei der weiteren Zubereitung, um einen Vergleich mit dem gewünschten Ergebnis durchführen zu können, und/oder eine regulierte Zubereitung durchzuführen.

Bspw. kann zuvor gemäß Schritt b) bei der zweiten Erfassung der Ergebniswert als ein solcher Ergebniswert ermittelt werden, welcher die Beendigung eines Zubereitungsschrittes indiziert. Vorzugsweise kann anhand der zweiten Erfassung und/oder anhand des Ergebniswertes eine Zubereitungsdauer für diesen Zubereitungsschritt bestimmt werden und/oder gemäß Schritt c) aufgezeichnet werden. Es ist auch denkbar, dass eine Rezeptinformation Daten über mehrere Zubereitungsschritte umfasst, sodass bspw. gemäß Schritt c) eine erste Zubereitungsdauer für einen ersten Zubereitungsschritt und/oder eine zweite Zubereitungsdauer für einen zweiten Zubereitungsschritt aufgezeichnet werden können. Insbesondere kann dann bei der Initiierung und/oder Durchführung einer weiteren Zubereitung der jeweilige Zubereitungsschritt dieser weiteren Zubereitung an die zuvor aufgezeichnete Zubereitungsdauer angepasst werden. Bspw. wird hierzu beim Starten eines ersten Zubereitungsschrittes der weiteren Zubereitung ein Timer gestartet und nach dem Erreichen der ersten Zubereitungsdauer, welche zuvor aufgezeichnet wurde, das Steuerungssignal ausgegeben. Das Steuerungssignal dient dann bspw. zur Beendigung des ersten Zubereitungsschrittes und/oder zur Initiierung eines zweiten Zubereitungsschrittes. Dieser Vorgang kann insbesondere in analoger Weise für die zweite Zubereitungsdauer und den zweiten Zubereitungsschritt erfolgen. Dies hat den Vorteil, dass eine gleichbleibende Zubereitungsqualität gewährleistet werden kann.

Gemäß einem weiteren Vorteil kann es vorgesehen sein, dass der aufgezeichnete Ansteuerungswert und/oder der aufgezeichnete Ergebniswert zumindest einem Zubereitungsschritt im Zubereitungsbetrieb zugeordnet wird (bzw. einem Zubereitungsschritt der Zubereitung), wobei eine zumindest teilweise Automatische Adaptierung des zugeordneten Zubereitungsschrittes, insbesondere einer Zubereitungsdauer des Zubereitungsschrittes, vorzugsweise einer Rührdauer, und/oder des oder eines weiteren Ansteuerungsparameters, in einem weiteren Zubereitungsbetrieb anhand der Zubereitungsaufzeichnung erfolgt. Vorzugsweise sind dabei für eine bestimmte Zubereitung, welche bspw. durch eine Rezeptinformation vorgegeben wird, mehrere Zubereitungsschritte vorgesehen. Bevorzugt kann jedem dieser Zubereitungsschritte anhand der Zubereitungsaufzeichnung eine individuelle Zubereitungsdauer zugeordnet werden, welche insbesondere der Zubereitungsdauer entspricht, welche der jeweilige Zubereitungsschritt bei der Aufzeichnung und/oder Ermittlung (gemäß den Schritten a), b) und/oder c)) hatte. Dies hat den Vorteil, dass anhand nur einer Aufzeichnung die Ergebnisse der Zubereitung auch für zukünftige Zubereitungen reproduzierbar sind.

Weiterhin kann es im Rahmen der Erfindung möglich sein, dass zur Initiierung des, insbesondere mindestens einem weiteren, Zubereitungsbetriebs eine Rezeptauswahl (insbesondere durch eine Bedienerangabe) durchgeführt wird, und eine Adaptierung des Zubereitungsbetriebs, insbesondere anhand der Zubereitungsaufzeichnung, nur dann erfolgt, wenn eine durch die Zubereitungsaufzeichnung vorgegebene Rezeptauswahl für die aufgezeichnete Zubereitung (d. h. welche bei der aufgezeichneten Zubereitung verwendet wurde) der durchgeführten Rezeptauswahl entspricht. Auf diese Weise wird gewährleistet, dass die Zubereitungsaufzeichnung einem bestimmten Rezept zugeordnet ist und/oder nur für diese bestimmte Rezeptauswahl reproduziert wird. Hierzu wird bspw. die vorgegebene Rezeptauswahl bei Schritt c) ebenfalls in der Zubereitungsaufzeichnung gespeichert. Der Vergleich mit der (aktuellen bzw. durchgeführten) Rezeptauswahl der weiteren Zubereitung mit der vorgegebenen Rezeptauswahl erfolgt bspw. durch eine Verarbeitungseinheit der Küchenmaschine. Somit ist es auch denkbar, dass mehrere Zubereitungsaufzeichnungen für unterschiedliche Rezepte bzw. Rezeptinformationen aufgezeichnet werden und/oder gleichzeitig gespeichert sind. Hierdurch ist ein besonders flexibler Einsatz des Verfahrens für unterschiedliche Rezepte möglich.

Des Weiteren ist es denkbar, dass während zumindest eines weiteren Zubereitungsbetriebs, insbesondere bei entsprechender Rezeptauswahl, eine Überwachung der Ergebnisparameter und/oder Ansteuerungsparameter zur Ermittlung von Überwachungswerten erfolgt, wobei insbesondere die Überwachungswerte mit den Werten der, vorzugsweise entsprechenden, Zubereitungsaufzeichnung verglichen werden, und bevorzugt eine weitere Zubereitung im weiteren Zubereitungsbetrieb anhand des Vergleichs angepasst wird, sodass insbesondere die weitere Zubereitung an die aufgezeichnete Zubereitung angeglichen wird. Alternativ oder zusätzlich kann es auch vorgesehen sein, dass die Zubereitungsaufzeichnung anhand der ermittelten Überwachungswerte angepasst wird, z. B. dann, wenn ein Überwachungswert (welcher z. B. durch eine Überwachung des Ergebnisparameters ermittelt wurde) optimaler ist als ein aufgezeichneter Ergebniswert und/oder insbesondere nur dann, wenn ein Qualitätsparameter des Ergebnisses der weiteren Zubereitung einen aufgezeichneten Qualitätsparameter des Ergebnisses der aufgezeichneten Zubereitung übersteigt. Der Qualitätsparameter kann bspw. eine (durch Benutzereingabe) vorgegebene Konsistenz des Lebensmittels sein. Somit kann insbesondere anhand der weiteren Zubereitung die Zubereitungsaufzeichnung verbessert werden, wenn z. B. die weitere Zubereitung relevanter ist, d. h. zu einem optimaleren und/oder in sonstiger Weise für den Bediener relevanteren Ergebnis der Zubereitung führt.

Es kann möglich sein, dass bei Schritt a) und/oder b) sämtliche Parameter als Ansteuerungsparameter und/oder Ergebnisparameter erfasst werden, welche die Zubereitung bzw. das Ergebnis bei der Zubereitung beeinflussen und/oder an der Küchenmaschine durch Sensoren erfasst werden. Hierdurch erfolgt eine möglichst umfangreiche Aufzeichnung der Zubereitung.

Ferner ist es denkbar, dass durch eine Rezeptauswahl zumindest eine Rezeptinformation ausgewählt wird, welche zumindest einen oder sämtliche und/oder die einzelnen Zubereitungsschritte für die Zubereitung im Zubereitungsbetrieb umfasst, wobei bevorzugt die Rezeptauswahl außerhalb des Zubereitungsbetriebs erfolgt, z. B. durch eine Bedienereingabe. Insbesondere kann es möglich sein, dass die Rezeptinformation mehrere Daten über die Art und/oder Menge und/oder Qualität des wenigstens einen zubereiteten Lebensmittels umfasst. Bspw. ist es denkbar, dass diese Daten zumindest teilweise auf einem Display der Küchenmaschine für einen Bediener angezeigt werden. Weiter kann es auch vorgesehen sein, dass diese Rezeptinformation und/oder die Daten anhand der Zubereitungsaufzeichnung angepasst werden, um das Ergebnis der Zubereitung zu optimieren.

Vorzugsweise kann es im Rahmen der Erfindung vorgesehen sein, dass durch eine Auswertung der Zubereitungsaufzeichnung eine Abweichung von einer Rezeptinformation bestimmt wird, wobei insbesondere das mindestens eine Steuerungssignal derart ausgegeben wird, dass die Abweichung in einem weiteren Zubereitungsbetrieb Berücksichtigung findet. Bspw. kann vor der Initiierung des weiteren Zubereitungsbetriebs die Abweichung, z. B. durch eine Verarbeitungseinheit der Küchenmaschine ausgewertet werden, und/oder nach der anschließenden Initiierung des Zubereitungsbetriebs die Zubereitung entsprechend angesteuert werden, dass die Abweichung Berücksichtigung findet. Damit wird gewährleistet, dass die weitere Zubereitung derart von der Rezeptinformation abweicht, dass die Zubereitung anhand der Zubereitungsaufzeichnung optimiert wird.

Gemäß einem weiteren Vorteil kann vorgesehen sein, dass die Zubereitungsaufzeichnung mit Informationen über mindestens einen Zubereitungsschritt und/oder über das bei der aufgezeichneten Zubereitung verwendete mindestens eine Lebensmittel ergänzt wird, sodass insbesondere eine neue Rezeptinformation erstellt wird, wobei die neue Rezeptinformation durch eine Rezeptauswahl, insbesondere durch eine Bedienereingabe, ausgewählt wird, um in Abhängigkeit von der Zubereitungsaufzeichnung einen weiteren Zubereitungsbetrieb durchzuführen. Auf diese Weise ist es z. B. möglich, dass ein Bediener ein vollständig neues Rezept aufzeichnet und anschließend die Zubereitung gemäß der Aufzeichnung durch Auswahl der neuen Rezeptinformation erneut durchführen kann. Hierzu kann es bspw. vorgesehen sein, dass durch eine Bedienereingabe sowohl die einzelnen Zubereitungsschritte als auch die darin verwendeten und/oder zubereiteten Lebensmittel z. B. auch anhand von Art und/oder Menge, konfiguriert und/oder eingegeben werden. Damit ist ein sehr vielseitiger Einsatz der Küchenmaschine möglich.

Besonders vorteilhaft kann es sein, wenn gemäß Schritt a) ein zeitlicher erster Verlauf des Ansteuerungsparameters erfasst und/oder gemäß Schritt c) aufgezeichnet wird, und/oder gemäß Schritt a) ein zeitlicher zweiter Verlauf des Ergebnisparameters erfasst und/oder gemäß Schritt c) aufgezeichnet wird. Insbesondere kann es möglich sein, dass die Aufzeichnung des ersten Verlaufs und/oder des zweiten Verlaufs durch die Aufzeichnung der ermittelten Ansteuerungswerte bzw. Ergebniswerte erfolgt. Entsprechend ist es denkbar, dass die Zubereitungsaufzeichnung den ersten Verlauf und/oder den zweiten Verlauf umfasst. Somit kann bei einer weiteren Zubereitung anhand der Zubereitungsaufzeichnung z. B. der erste und/oder zweite Verlauf ausgewertet werden, um z. B. eine (insbesondere zeitabhängige) Anpassung der weiteren Zubereitung anhand wenigstens einer der Verläufe vorzunehmen. Dies ermöglicht eine besonders genaue Reproduktion der aufgezeichneten Zubereitung.

Ferner kann es möglich sein, dass die Ansteuerungsparameter zumindest einen der folgenden Parameter umfasst:
- eine Temperatur an der Küchenmaschine, vorzugsweise an einem Heizelement (Heizung) und/oder dergleichen, und/oder weitere Temperaturen an der Küchenmaschine, und/oder eine Umgebungstemperatur der Küchenmaschine,
- eine Geschwindigkeit an der Küchenmaschine, vorzugsweise eines Rührwerks der Küchenmaschine,
- eine zeitliche Zubereitungsdauer eines einzelnen Zubereitungsschrittes der Zubereitung im Zubereitungsbetrieb, und/oder weitere Zubereitungsdauern von weiteren Zubereitungsschritten,
- eine Gesamtzubereitungsdauer,
- zumindest eine Menge und/oder Qualität des zubereiteten Lebensmittels,
- zumindest eine Drehzahl an der Küchenmaschine, vorzugsweise eines Rührwerks,
- zumindest eine Erfassungsgröße,
- zumindest einen Zubereitungsparameter.

Dabei ist es denkbar, dass gemäß Schritt a) zumindest einer oder mehrere dieser Erfassungsparameter erfasst werden, und/oder zumindest eine oder mehrere Ansteuerungswerte entsprechend ermittelt und/oder ausgewertet und/oder aufgezeichnet werden. Somit kann das Ergebnis der Zubereitungsaufzeichnung weiter optimiert werden. Von weiterem Vorteil können gemäß Schritt b) zumindest zwei Ergebniswerte durch die zweite Erfassung von jeweils unterschiedlichen Ergebnisparametern ermittelt werden, vorzugsweise ein erster Ergebnisparameter durch einen ersten Sensor und/oder ein zweiter Ergebnisparameter durch einen zweiten Sensor, wobei die Sensoren vorzugsweise an der Küchenmaschine und/oder an der Umgebung der Küchenmaschine angeordnet sind. Insbesondere ist es möglich, dass ein erster Ergebnisparameter ein erster Zubereitungsparameter ist, vorzugsweise eine Temperatur an der Küchenmaschine, vorzugsweise am zubereiteten Lebensmittel, und/oder ein zweiter Ergebnisparameter ein zweiter Zubereitungsparameter, vorzugsweise ein Motorstrom, ist, wobei sich bevorzugt der erste Zubereitungsparameter von dem zweiten Zubereitungsparameter unterscheidet. Auch hierdurch ist eine weitere Optimierung der Zubereitungsaufzeichnung möglich, um so z. B. eine sehr exakte Reproduktion der aufgezeichneten Zubereitung durchführen zu können. Insbesondere können somit auch Kombination von verschiedenen Ansteuerungsparametern erfasst und/oder die entsprechenden Ansteuerungswerte aufgezeichnet werden (z. B. die Kombination aus der Drehzahl und/oder der Drehrichtung und/oder der Temperatur des Heizelements und/oder der Zubereitungsdauer).

Es kann weiter von Vorteil sein, wenn die Auswahl der zu erfassenden Ergebnisparameter und/oder Ansteuerungsparameter in einer Parametervorlage gespeichert sind, wobei insbesondere die erste und/oder zweite Erfassung in Abhängigkeit von der Parametervorlage durchgeführt werden, wobei besonders bevorzugt die Parametervorlage vorzugsweise rezeptabhängig ausgelesen wird. Insbesondere kann dazu ein Bediener eine Bedienereingabe durchführen, um das Rezept (die Rezeptinformation) auszuwählen und/oder somit die Parametervorlage zu bestimmen. Dies gewährleistet z. B., dass die Zubereitungsaufzeichnung zuverlässig einem bestimmten Rezept und/oder zuzubereitenden Lebensmitteln zugeordnet werden kann.

Insbesondere ist es denkbar, dass eine Anpassung anhand der Zubereitungsaufzeichnung erfolgt, um insbesondere Benutzervorliegen zu berücksichtigen, welche vorzugsweise durch die Aufzeichnung erfassbar sind. So kann z. B. bei der Ermittlung und Aufzeichnung (d. h. insbesondere gemäß den Schritten a) bis c)) durch den Ergebniswert ermittelt werden, wann der Zubereitungsschritt endet, wodurch eine Benutzerinformation bestimmt wird. Die Benutzerinformationen bietet dabei nicht oder nicht nur Informationen über die Zubereitungsdauer. Vorzugsweise bietet die Benutzerinformation und/oder der Ergebniswert auch einen Hinweis oder eine Information darüber, wie das Ergebnis der Zubereitung bei der Aufzeichnung war bzw. sein sollte. Somit ist es möglich, dass z. B. unabhängig von der konkreten Zubereitung und/oder Zubereitungsdauer das Ergebnis der Zubereitung aufgezeichnet wird, insbesondere bei Schritt c) des erfindungsgemäßen Verfahrens. Eine weitere Zubereitung kann dann anhand der Zubereitungsaufzeichnung derart erfolgen, dass die Zubereitungsschritte so angepasst werden, dass das aufgezeichnete Ergebnis erreicht wird. Die weitere Zubereitung kann unter Umständen auch unterschiedlich zur Zubereitung bei der Aufzeichnung durchgeführt werden, da die konkreten Zubereitungsschritte auch abhängig sind von den verwendeten Lebensmitteln oder Umgebungsbedingungen, welche sich von denjenigen zum Zeitpunkt der Aufzeichnung unterscheiden können. Es wird dann (z. B. in Abhängigkeit von den verwendeten Lebensmitteln oder Umgebungsbedingungen oder weiterer Erfassungsgrößen) eine Zubereitung durchgeführt, welche zum (gewünschten) aufgezeichneten Ergebnis führt. Hierzu kann bspw. eine Auswertung der Zubereitungsaufzeichnung und/oder der erfassen Lebensmittelparameter und/oder Zubereitungsparameter und/oder Umgebungsbedingungen und/oder Erfassungsgrößen durch eine (z. B. elektronische) Verarbeitungseinheit der Küchenmaschine erfolgen.

Vorzugsweise ist eine Überwachungsvorrichtung vorgesehen, welche eine Ermittlung von mindestens einem Erfassungswert durch eine Erfassung von mindestens eine für einen Zustand der Zubereitung spezifische Erfassungsgröße an der Küchenmaschine durchführt. Bevorzugt weist die Küchenmaschine die Überwachungsvorrichtung auf, welche insbesondere zumindest während des Zubereitungsbetriebs die Ermittlung der Erfassungswerte als jeweils zeitlich aufeinanderfolgende Erfassungswerte (durch die Erfassung) durchführt. Besonders bevorzugt ist der Erfassungswert bzw. sind die Erfassungswerte für wenigstens einen Zubereitungsparameter der Küchenmaschine und/oder für einen Zustand der Zubereitung des Lebensmittels und/oder für den Ansteuerungsparameter spezifisch. Ein erster Erfassungswert entspricht dabei bspw. dem Ansteuerungswert und/oder ein zweiter Erfassungswert entspricht dem Ergebniswert. Insbesondere ist denkbar, dass eine erste Erfassungsgröße dem Ansteuerungsparameter entspricht und/oder von diesem abhängig ist. Ebenso kann es möglich sein, dass eine zweite Erfassungsgröße dem Ergebnisparameter entspricht und/oder von diesem abhängig ist.

Insbesondere umfasst mindestens eine der für den Zustand der Zubereitung spezifischen Erfassungsgrößen mindestens den einen Ansteuerungsparameter. Auf diese Weise kann z. B. die Temperatur an der Küchenmaschine, die Rührrichtung oder dergleichen anhand des Erfassungswertes ausgewertet werden. Bevorzugt ist daher der mindestens eine Erfassungswert abhängig von dem Ansteuerungsparameter.

Alternativ oder zusätzlich umfasst die mindestens eine für den Zustand der Zubereitung spezifische Erfassungsgröße (neben oder anstatt zumindest einer der Ansteuerungsparameter) auch wenigstens eine durch mindestens einen Sensor am (zubereiteten) Lebensmittel erfasste physikalische Größe (d. h. insbesondere der Ergebnisparameter), insbesondere eine Messgröße. Der Erfassungswert ist dabei bspw. abhängig von einer Temperatur am Lebensmittel oder dergleichen. Insbesondere umfasst der Erfassungswert eine visuelle Information über das Lebensmittel. Damit ist es möglich, auch weitere Informationen, insbesondere über ein Ergebnis der Zubereitung, anhand des mindestens einen Erfassungswertes auszuwerten.

Vorzugsweise können dabei auch mehr als eine Erfassungsgröße, insbesondere während eines einzigen Zubereitungsbetriebs, erfasst werden, z. B. mindestens 2 oder mindestens 3 oder mindestens 4 oder mindestens 5 oder mindestens 6 oder mindestens 10 oder mindestens 20, insbesondere auch jeweils verschiedenartige, Erfassungsgrößen. Bevorzugt unterscheiden sich die (sämtlichen) erfassten Erfassungsgrößen, wie die erste und zweite Erfassungsgröße, voneinander in Bezug auf deren Art, sodass bspw. eine erste Erfassungsgröße als Motorsignal (d. h. z. B. Stärke wie Stromstärke des Motorsignals) oder dergleichen und eine zweite Erfassungsgröße als Temperatur oder dergleichen ausgeführt sein kann. Weiter kann es auch vorgesehen sein, dass die erste Erfassungsgröße eine Größe (direkt) am Lebensmittel und/oder direkt beeinflusst durch das Lebensmittel (wie die Motorstromstärke) ist, und insbesondere die zweite Erfassungsgröße eine Größe der Umgebung der Küchenmaschine und/oder des Lebensmittels ist und/oder eine Größe ist, welche durch diese Umgebung beeinflusst wird. Auch kann es möglich sein, dass die Anzahl und/oder Art der erfassten Erfassungsgrößen in Abhängigkeit von dem (eingestellten) zuzubereitenden Lebensmittel festgelegt werden, z. B. durch eine Verarbeitungsvorrichtung der Küchenmaschine und/oder in Abhängigkeit von einer Bedienereingabe und/oder einer Rezeptauswahl und/oder einer Erfassungsgrößenauswahl. Somit kann die Zubereitung deutlich verbessert werden. Bevorzugt umfassen die Ansteuerungsparameter und/oder die Ergebnisparameter die zumindest eine Erfassungsgröße.

Bspw. wird durch die Ausgabe des Steuerungssignals ein Ansteuerungsparameter wie die zeitliche Rührdauer und/oder die Rührwerksdrehzahl beeinflusst und/oder festgelegt. Somit kann in Abhängigkeit von dem für die Zubereitung vorgesehenen (dem zuzubereitenden) Lebensmittel die optimalen Ansteuerungsparameter bestimmt werden und/oder die Zubereitung entsprechend beeinflusst werden. Das Steuerungssignal wird bspw. durch eine Verarbeitungsvorrichtung und/oder durch die Überwachungsvorrichtung und/oder durch eine Steuerungsvorrichtung und/oder durch eine Elektronik der Küchenmaschine ausgegeben.

Vorzugsweise bezieht sich der Begriff "Erfassungswert" im Rahmen der Erfindung auf einen (bspw. mittels eines Sensors) erfassbaren Wert und/oder Messwert der Erfassungsgröße, d. h. insbesondere einer physikalischen Größe bzw. Messgröße, welche insbesondere an der Küchenmaschine erfasst wird, wobei bevorzugt der Zubereitungsparameter die Erfassungsgröße ist oder beeinflusst. Insbesondere umfasst die Ermittlung der Erfassungswerte eine Messung (Erfassung) der Erfassungsgröße, wobei unter "Messung" in diesem Zusammenhang sowohl eine quantitative aber auch eine qualitative Erfassung verstanden werden kann, und diese somit nicht zwangsläufig die Festlegung einer Einheit und/oder die quantitative Aussage über die Erfassungsgröße umfassen muss. Der Erfassungswert kann bspw. lediglich ein Spannungswert und/oder Stromwert sein, wobei z. B. ein Verlauf ohne konkreten Vergleich mit einer Einheit durch die zeitabhängige Analyse analysiert wird und/oder für die Analyseinformation herangezogen wird. Der Erfassungswert ist dabei bspw. proportional und/oder eindeutig zuordenbar zum tatsächlichen Wert der Erfassungsgröße. Bevorzugt entspricht der Ansteuerungswert und/oder der Ergebniswert dem Erfassungswert oder weist analog dazu die beschriebenen Eigenschaften auf.

Bevorzugt bezeichnet im Rahmen der Erfindung die Erfassungsgröße, insbesondere der Ansteuerungsparameter und/oder der Ergebnisparameter (und/oder der Zubereitungsparameter), eine erfassbare (messbare) physikalische Größe (wie z. B. die Drehzahl des Rührwerks) und/oder Stellgröße (wie das Motorsignal) und/oder Einflussgröße (wie die Temperatur) an der Küchenmaschine, wobei die Erfassungsgröße und/oder der Zubereitungsparameter vorzugsweise (ausschließlich) indirekt von dem Zustand der Zubereitung beeinflusst wird, wie der Motorstrom eines Elektromotors zum Antreiben des Rührwerks. Bspw. bewirkt eine Veränderung der Konsistenz des Lebensmittels einen veränderten (Rühr-) Widerstand auf das Rührwerk und hat damit indirekt Einfluss auf den Motorstrom. Somit ist vorzugsweise der zeitliche Verlauf der Messwerte bzw. Erfassungswerte abhängig von einem Verlauf des Rührwiderstands des Rührwerks.

Des Weiteren kann es im Rahmen der Erfindung vorgesehen sein, dass die erste und/oder zweite Erfassungsgröße jeweils an der Küchenmaschine physikalisch messbare Größen umfassen, welche eine durch die Zubereitung veränderbare Eigenschaft des Lebensmittels jeweils in unterschiedlicher Weise beeinflussen und/oder durch diese Eigenschaft beeinflusst werden, sodass sie insbesondere für einen Zustand der Zubereitung spezifisch sind, wobei vorzugsweise die erste Erfassungsgröße und/oder die zweite Erfassungsgröße und/oder jede (sämtliche) Erfassungsgrößen jeweils diese veränderbare Eigenschaft des Lebensmittels in unterschiedlicher Weise beeinflussen oder durch die Eigenschaft in unterschiedlicher Weise beeinflusst werden. Bevorzugt ist dabei die erste Erfassungsgröße ein Signal, z. B. ein Motorstrom eines Motors eines Antriebs für die Bearbeitungsvorrichtung, und/oder die zweite Erfassungsgröße eine Temperatur des zubereiten Lebensmittels. Bspw. können einige oder sämtliche Erfassungsgrößen direkt oder indirekt von einem Rührwiderstand des Rührwerks der Küchenmaschine abhängig sein. Des Weiteren kann es möglich sein, dass mindestens eine der erfassten Erfassungsgrößen direkt oder indirekt von einem Zustand des zuzubereitenden Lebensmittels, insbesondere während des Zubereitungsbetriebs, abhängig ist. Auf diese Weise können Rückschlüsse auf den Zustand des Lebensmittels anhand bspw. der Erfassungswerte geschlossen werden.

Ferner kann es im Rahmen der Erfindung vorgesehen sein, dass die Erfassungsgrößen und/oder der Ansteuerungsparameter und/oder der Ergebnisparameter jeweils mindestens eine der folgenden Größen, insbesondere Zubereitungsparameter, umfassen, und/oder jeweils mindestens eine der folgenden Größen sind und/oder davon beeinflusst werden:
- eine Drehzahl der Bearbeitungsvorrichtung, vorzugsweise eines Rührwerks der Küchenmaschine,
- ein Parameter eines Antriebs, vorzugsweise eines Motors des Antriebs, z. B. ein Drehmoment,
- ein Motorsignal, bevorzugt ein Motorstrom, welches von einem Drehmoment des Rührwerks der Küchenmaschine abhängig ist,
- eine Temperatur, welche insbesondere an dem zubereiteten Lebensmittel durch einen in der Küchenmaschine integrierten Temperatursensor erfasst wird,
- eine Kerntemperatur des zubereiteten Lebensmittels,
- eine Oberflächentemperatur des zubereiteten Lebensmittels,
- ein Gewicht des zubereiteten Lebensmittels, wobei das Gewicht durch eine in der Küchenmaschine integrierten Waage erfasst wird,
- ein messbarer Parameter am zubereiteten Lebensmittel, welcher insbesondere für einen Fertigstellungszeitpunkt des zubereiteten Lebensmittels spezifisch ist,
- eine Zeitdauer, vorzugsweise Rührdauer des Rührwerks, insbesondere seit dem Zeitpunkt der Aktivierung des Zubereitungsbetriebs,
- eine Helligkeit, welche z. B. durch einen optischen Sensor am zubereiteten Lebensmittel erfasst wird,
- eine Lautstärke, welche insbesondere durch einen akustischen Sensor am zubereiteten Lebensmittel erfasst wird,
- zumindest eine Benutzereingabe,
- eine Konsistenz des zubereiteten Lebensmittels,
- eine elektrische Eigenschaft des zubereiteten Lebensmittels, vorzugsweise der elektrische Widerstand des Lebensmittels,
- eine Geruchsstoffkonzentration am zubereiteten und/oder des zubereiteten Lebensmittels, bevorzugt innerhalb eines Rührgefäßes der Küchenmaschine,
- eine Geschmacksstoffkonzentration am zubereiteten und/oder des zubereiteten Lebensmittels, bevorzugt innerhalb eines Rührgefäßes der Küchenmaschine,
- zumindest eine chemische Größe des zubereiteten Lebensmittels, insbesondere ein pH-Wert und/oder eine Konzentration des zubereiteten Lebensmittels,
- ein Druck im Bereich des zubereiteten Lebensmittels und/oder ein Druckverlauf, vorzugsweise in einem Rührgefäß der Küchenmaschine,
- zumindest eine spektrale Eigenschaft des zubereiteten Lebensmittels.

Dabei ist es denkbar, dass die Erfassungsgröße vor und/oder bei und/oder nach dem Zubereitungsbetrieb am Lebensmittel erfasst wird. Insbesondere ist es denkbar, dass eine elektronische Datenbank vorgesehen ist, welche bspw. Vergleichswerte für die jeweiligen Erfassungsgrößen umfasst, um insbesondere anhand dieser Vergleichswerte die Erfassungswerte auszuwerten. Auf diese Weise können bspw. anhand von statistischen Verfahren eine Vielzahl von Erfassungsgrößen für die Optimierung der Zubereitung in Beziehung zueinander gesetzt werden.

Selbstverständlich ist es auch denkbar, dass ein einziger Erfassungswert dadurch ermittelt wird und/oder eine einzige Erfassungsgröße dadurch erfasst wird, dass zumindest zwei oder mehr Sensoren (z. B. gleichzeitig) ausgewertet werden. Der Einsatz von einem Verbund von mehreren Sensoren ermöglicht dabei eine deutliche Erhöhung der Qualität der Zubereitung.

Außerdem ist es denkbar, dass im Zubereitungsbetrieb periodisch und/oder wiederholt erste Erfassungswerte ermittelt werden und vorzugsweise parallel dazu, d. h. z. B. innerhalb der gleichen Periode bzw. im gleichen Zyklus und/oder im Wesentlichen gleichzeitig, im Zubereitungsbetrieb periodisch und/oder wiederholt zweite Erfassungswerte und/oder weitere Erfassungswerte ermittelt werden.

Insbesondere ist es möglich, dass die Beeinflussung des weiteren Zubereitungsbetriebs derart erfolgt, dass ein optimaler Fertigstellungszeitpunkt des zubereiteten Lebensmittels bei der Zubereitung berücksichtigt wird, welcher insbesondere durch die Zubereitungsaufzeichnung vorgegeben wird. Hierzu kann bspw. auch der optimale Fertigstellungszeitpunkt dadurch bestimmt werden, dass eine Auswertung der Erfassungswerte während der Zubereitung erfolgt. Insbesondere kann dabei das Steuerungssignal zeitlich derart ausgegeben wird, z. B. unter Berücksichtigung einer Latenzzeit, dass eine Deaktivierung des Zubereitungsbetriebs zum Fertigstellungszeitpunkt bewirkt wird.

Ferner ist es denkbar, dass die Erfassungsgröße und/oder ein Ansteuerungsparameter und/oder ein Ergebnisparameter, bevorzugt eine erste und/oder eine zweite Erfassungsgröße, ein Umgebungsparameter außerhalb der Küchenmaschine ist, vorzugsweise
- eine räumliche und/oder geographische und/oder örtliche Position der Küchenmaschine, insbesondere in Form einer GPS-Koordinate der Küchenmaschine, um die Zubereitung z. B. an geografische Unterschiede anzupassen,
- eine Information über das Lebensmittel und/oder die Zubereitung des Lebensmittels, welche außerhalb der Küchenmaschine gespeichert ist, vorzugsweise in einer (z. B. elektronischen) Datenbank, um vorzugsweise über ein Netzwerk und/oder cloudbasiert (d. h. z. B. von einem entfernten Rechner über ein Netzwerk und/oder über das Internet) abgerufen wird,
- eine Produktinformation des Lebensmittels, insbesondere über herstellerbezogene Eigenschaften und/oder die Zutaten und/oder über das Mindesthaltbarkeitsdatum, welche bspw. durch das Einscannen eines Strichcodes und/oder einer sonstigen Kennzeichnung ermittelbar ist und/oder manuell durch den Bediener eingegeben wird und/oder von der Datenbank abgerufen werden kann,
- ein Luftdruck außerhalb der Küchenmaschine,
- eine Luftfeuchtigkeit außerhalb der Küchenmaschine,
- eine Temperatur außerhalb der Küchenmaschine (z. B. Umgebungstemperatur),
- eine Uhrzeit und/oder Tageszeit und/oder ein Datum, welche bspw. über die Datenbank und/oder eine weitere Datenbank ermittelbar ist,
wobei vorzugsweise die erste Erfassungsgröße ein Parameter der Zubereitungs-Umgebung (z. B. innerhalb des Rührgefäßes) innerhalb der Küchenmaschine ist.

Es kann außerdem vorgesehen sein, dass die nachfolgenden Schritte vorgesehen sind, vorzugsweise vor Schritt a) und/oder zur Initiierung der Zubereitung:
- Einstellen und/oder Auswählen eines zuzubereitenden Lebensmittels und/oder eines Rezeptes (d. h. einer Rezeptinformation) durch eine Bedienereingabe an der Küchenmaschine,
- Auswählen einer Zubereitungsaufzeichnung in Abhängigkeit von dem eingestellten Lebensmittel bzw. der Rezeptauswahl.

Weiter ist es denkbar, dass eine Auswahl der Zubereitungsaufzeichnung dadurch erfolgt, dass die Zubereitungsaufzeichnung in Abhängigkeit von einem eingestellten Lebensmittel aus einer Datenbank ausgelesen wird, wobei vorzugsweise die Datenbank lokal und/oder durch einen zur Küchenmaschine entfernten (z. B. räumlich entfernt angeordneten und/oder über ein Netzwerk steuerbaren) Rechner cloudbasiert über ein Netzwerk und/oder das Internet und/oder durch eine (insbesondere) mobile Datenspeichereinheit bereitgestellt wird. Unter einer mobilen Datenspeichereinheit wird bspw. auch ein USB-Stick und/oder ein sonstiger tragbarer Datenspeicher verstanden, welcher bspw. in der Küchenmaschine einsetzbar und/oder mit der Küchenmaschine verbindbar ist. Somit können bspw. flexibel neue Zubereitungsaufzeichnungen für die Küchenmaschine bereitgestellt werden. Insbesondere kann die Zubereitungsaufzeichnung z. B. in Abhängigkeit von einem zur Zubereitung voreingestellten und/oder vorgesehenen Lebensmittel ausgewählt werden und/oder rezeptabhängig (d. h. bspw. in Abhängigkeit von einem digital gespeicherten Rezept zur automatischen Zubereitung des Lebensmittels) ausgewählt werden. Die Datenbank ist dabei bspw. ein System zur elektronischen Datenverwaltung, vorzugsweise softwarebasiert. Insbesondere kann dabei vorgesehen sein, dass die Auswahl der Zubereitungsaufzeichnung während des Ablaufs eines Rezepts, z. B. an einem bestimmten Punkt des Rezepts, erfolgt.

Es kann möglich sein, dass die Zubereitungsaufzeichnung in zumindest einer Datenspeichereinheit gespeichert wird. Die Speicherung erfolgt insbesondere zur Aufzeichnung gemäß Schritt c), vorzugsweise lokal in der Küchenmaschine und/oder auf einem entfernten Rechner. So ist es bspw. denkbar, dass zur Aufzeichnung und/oder Speicherung die Zubereitungsaufzeichnung zumindest teilweise über ein Netzwerk an eine Datenspeichereinheit des entfernten Rechners übertragen wird. Die Aufzeichnung und/oder Speicherung erfolgt bspw. erst nach Beendigung der Zubereitung oder fortlaufend während der Zubreitung. Auch kann es möglich sein, dass eine lokale Speicherung der (zumindest teilweisen) Zubereitungsaufzeichnung auf einer lokalen Datenspeichereinheit der Küchenmaschine vorübergehend oder persistent während der Zubereitung erfolgt, und vorzugsweise anschließend (z. B. nach Beendigung der Zubereitung) die (zwischengespeicherte und/oder lokal gespeicherte und/oder vollständige) Zubereitungsaufzeichnung über das Netzwerk an den entfernten Rechner und/oder eine entfernte Datenspeichereinheit übertragen wird. Dies hat bspw. den Vorteil, dass auch andere Benutzer und/oder Küchenmaschinen auf die im entfernten Rechner zur Verfügung gestellten Zubereitungsaufzeichnung(en) Zugriff haben. Es kann möglich sein, dass nach der Übertragung an den entfernten Rechner die Zubereitungsaufzeichnung lokal (von der lokalen Datenspeichereinheit) gelöscht wird. Auf diese Weise kann z. B. der Vorteil erzielt werden, dass der lokale Speicherbedarf (der Küchenmaschine) reduziert wird. Auch ist es denkbar, dass (anstatt oder neben) der Zubereitungsaufzeichnung noch weitere Informationen von der Küchenmaschine (über das Netzwerk) an den entfernten Rechner (Computer) übertragen werden. Bspw. können Optimierungsvorgaben, z. B. Auswertungs- und/oder Optimierungsalgorithmen, übertragen werden, welche z. B. zur Auswertung der Zubereitungsaufzeichnung durch die Küchenmaschine dienen. Die Optimierungsvorgabe dient bspw. zur Steuerung einer Verarbeitungsvorrichtung der Küchenmaschine (im Sinne eines Computerprogrammes, welches von der Verarbeitungsvorrichtung ausgeführt wird). Insbesondere kann somit dadurch, dass die Optimierungsvorgabe auf dem entfernten Rechner gespeichert wird, die Optimierungsvorgabe auch für unterschiedliche Küchenmaschinen über das Netzwerk (z. B. ein LAN-Netzwerk und/oder das Internet und/oder ein Mobilfunknetz) zur Verfügung gestellt werden. Alternativ oder zusätzlich ist der Optimierungsalgorithmus bzw. die Optimierungsvorgabe auch Teil der Zubereitungsaufzeichnung und dient damit z. B. zur Optimierung und/oder Anpassung einer (weiteren) Zubereitung. Vorzugsweise dient die Optimierungsvorgabe zur Durchführung der Anpassung und/oder Optimierung der aufgezeichneten Ergebniswerte der Zubereitungsaufzeichnung. Es ist des Weiteren denkbar, dass die Aufzeichnung gemäß Schritt c) nach und/oder bei Schritt a) und/oder Schritt b) durchgeführt wird.

Besonders bevorzugt kann es vorgesehen sein, dass in einem Zubereitungsbetrieb die Bearbeitungsvorrichtung, welche vorzugsweise ein Rührwerk umfasst, zur zumindest teilweise automatischen Zubereitung von unterschiedlichen Lebensmitteln, insbesondere Schlagsahne und/oder Nudeln und/oder Reis, und/oder Rezepten, wie z. B. Risotto oder Eis, in Abhängigkeit von Ansteuerungsparametern angesteuert wird, wobei für diese Lebensmittel bzw. Rezepte mindestens eine lebensmittelspezifische bzw. rezeptspezifische Zubereitungsaufzeichnung vorgesehen und/oder vorgespeichert ist. Alternativ oder zusätzlich kann es vorgesehen sein, dass eine Zubereitungsaufzeichnung eine Information über eine Erfassungsgrößenauswahl (insbesondere eine Auswahl von Ansteuerungsparameter bzw. Ergebnisparameter) umfasst, wobei die Zubereitungsaufzeichnung bspw. in Abhängigkeit von dem eingestellten Lebensmittel bzw. Rezept ausgewählt wird, und bei der Erfassung (nur) die Erfassungsgrößen erfasst werden, welche durch die Erfassungsgrößenauswahl der ausgewählten Zubereitungsaufzeichnung vorgegeben sind, sodass insbesondere bei Auswahl eines ersten zubereiteten Lebensmittels bzw. Rezeptes mindestens eine andere Erfassungsgröße erfasst wird, als bei Auswahl eines zweiten zubereiteten Lebensmittels bzw. Rezeptes. Insbesondere dient dabei die Erfassungsgrößenauswahl auch zur Parametrisierung der Ansteuerung der Bearbeitungsvorrichtung(en). Bevorzugt kann dabei die Zubereitungsaufzeichnung mit der Erfassungsgrößenauswahl und/oder nur die Erfassungsgrößenauswahl aus einer (z. B. elektronischen) Datenbank ausgelesen werden. Dies ermöglicht den flexiblen Einsatz von unterschiedlichen Lebensmitteln.

Ebenfalls Gegenstand der Erfindung ist eine Küchenmaschine mit mindestens einer Bearbeitungsvorrichtung und/oder einer Überwachungsvorrichtung, wobei in einem Zubereitungsbetrieb die Bearbeitungsvorrichtung zur zumindest teilweise automatischen Zubereitung von Lebensmitteln ansteuerbar ist. Insbesondere kann es möglich sein, dass die Überwachungsvorrichtung zumindest zwei Sensoren aufweist. Durch die Überwachungsvorrichtung und/oder einen ersten Sensor kann dabei mindestens ein Ansteuerungswert durch eine erste Erfassung von einem Ansteuerungsparameter an der Küchenmaschine ermittelbar sein. Weiter kann insbesondere durch die Überwachungsvorrichtung und/oder wenigstens einen zweiten Sensor mindestens ein Ergebniswert durch eine zweite Erfassung von mindestens einem Ergebnisparameter an der Küchenmaschine ermittelbar sein. Hierbei ist es insbesondere vorgesehen, dass die Überwachungsvorrichtung eine Datenspeichereinheit umfasst, durch welche insbesondere der Ansteuerungswert und/oder der Ergebniswert in einer Zubereitungsaufzeichnung speicherbar sind, sodass diese (Zubereitungsaufzeichnung) der Zubereitung als eine aufgezeichnete Zubereitung zuordenbar ist. Die Datenspeichereinheit kann dabei bspw. als ein nicht-flüchtiger Datenspeicher, insbesondere elektronischer Datenspeicher, ausgeführt sein.

Damit bringt die erfindungsgemäße Küchenmaschine die gleichen Vorteile mit sich, wie sie bereits ausführlich für ein erfindungsgemäßes Verfahren beschrieben worden sind. Zudem kann die erfindungsgemäße Küchenmaschine geeignet sein, gemäß einem erfindungsgemäßen Verfahren betrieben zu werden und/oder betreibbar zu sein.

Es kann ferner möglich sein, dass eine Eingabevorrichtung der Küchenmaschine vorgesehen ist. Insbesondere umfasst dabei die Eingabevorrichtung zumindest ein Bedienfeld und/oder einen Drehregler und/oder einen Drehknopf und/oder einen Schalter und/oder einen Taster. Bevorzugt umfasst dabei die Eingabevorrichtung den ersten und/oder zweiten und/oder dritten Sensor. Vorzugsweise wird durch die Eingabevorrichtung und/oder den ersten und/oder zweiten und/oder dritten Sensor der zumindest eine Ergebnisparameter erfasst.

Bevorzugt umfasst dabei der Ergebnisparameter zumindest einen er nachfolgenden Parameter:
- zumindest eine Temperatur, insbesondere am zubereiteten Lebensmittel und/oder der Umgebung der Küchenmaschine,
- eine visuelle Information des zubereiteten Lebensmittels, z. B. erfasst durch einen Kamerasensor,
- ein Gewicht des zubereiteten Lebensmittels, z. B. erfasst durch eine Waage der Küchenmaschine, wobei insbesondere die Waage den zweiten und/oder dritten Sensor aufweist,
- einen Qualitätsparameter des zubereiteten Lebensmittels, z. B. Erfasst durch eine Bedienereingabe,
- einen von der Zubereitung abhängigen Parameter an der Küchenmaschine, vorzugsweise einen Motorstrom eines Motors für ein Rührwerk der Küchenmaschine,
- eine Benutzereingabe, insbesondere eine manuelle Beendigung eines Zubereitungsschrittes und/oder Zubereitungsbetriebs,
- zumindest eine Erfassungsgröße und/oder zumindest einen Zubereitungsparameter.

Anhand der Benutzereingabe kann bspw. die Zubereitungsdauer eines bestimmten Zubereitungsschrittes der aufgezeichneten Zubereitung ermittelt werden. Somit können bspw. weitere Zubereitungen an die Benutzervorlieben angepasst werden.

Weiter kann es im Rahmen der Erfindung vorgesehen sein, dass die Bearbeitungsvorrichtung zumindest einen Antrieb und/oder einen durch den Antrieb betreibbares Bearbeitungswerkzeug, insbesondere ein Rührwerk der Küchenmaschine, umfasst, und vorzugsweise die Überwachungsvorrichtung elektrisch mit dem Antrieb derart verbunden ist, dass eine Erfassung zumindest einer der Erfassungsgrößen (z. B. der Ansteuerungsparameter und/oder Ergebnisparameter) durch die Überwachungsvorrichtung durchführbar ist. Die Erfassung kann dabei bspw. durch einen Sensor der Überwachungsvorrichtung erfolgen, welcher bspw. baulich getrennt von der Überwachungsvorrichtung (z. B. elektrisch und/oder über Funk mit der Überwachungsvorrichtung verbunden) z. B. im Bereich des zubereiteten Lebensmittels und/oder den hierfür vorgesehenen Bereich der Küchenmaschine angeordnet ist. Alternativ oder zusätzlich ist es denkbar, dass der erste Sensor und/oder der zweite Sensor jeweils die Erfassung am Lebensmittel durchführen und vorzugsweise im Bereich und/oder zumindest teilweise innerhalb eines Rührgefäßes der Küchenmaschine angeordnet sind, um somit insbesondere zuverlässig die Erfassungsgrößen erfassen zu können.

Des Weiteren kann es vorgesehen sein, dass die Küchenmaschine ein Rührgefäß zur Aufnahme des Lebensmittels aufweist, wobei insbesondere das Rührgefäß zur Erhaltung der Temperatur des Lebensmittels als Thermobehälter und/oder doppelwandig ausgeführt ist. Bspw. kann der erste und/oder der zweite und/oder ein weiterer Sensor vorgesehen sein und/oder im Bereich des Rührgefäßes derart angeordnet sein, dass eine Temperatur innerhalb des Rührgefäßes durch den Sensor und/oder durch Erfassung der Erfassungsgrößen ermittelbar ist. Damit kann bspw. die Temperatur erhalten und/oder überwacht werden.

Weiter ist es denkbar, dass der (erste und/oder zweite und/oder ein weiterer) Sensor in einem Rührgefäß der Küchenmaschine integriert ist, und vorzugsweise eine Erfassung von Erfassungsgrößen innerhalb und/oder außerhalb des Rührgefäßes durchführt, wobei das Rührgefäß bevorzugt lösbar in eine Rührgefäß-Aufnahme der Küchenmaschine einsetzbar ist. Alternativ oder zusätzlich ist es auch denkbar, dass der Sensor derart nachrüstbar ausgeführt ist, dass der Sensor in die Küchenmaschine und/oder in einem Rührgefäß der Küchenmaschine und/oder einem Deckel des Rührgefäßes lösbar einsetzbar ist, vorzugsweise einsteckbar ist. Somit kann bspw. ein bestehender Sensor ausgetauscht werden und/oder ein neuer Sensor nachgerüstet werden, um bspw. das erfindungsgemäße Verfahren für zusätzliche Lebensmittel und/oder zusätzliche Erfassungsgrößen durchführen zu können.

Ferner ist es im Rahmen der Erfindung denkbar, dass eine Rührgefäß-Aufnahme der Küchenmaschine und/oder ein in die Rührgefäß-Aufnahme einsetzbares Rührgefäß der Küchenmaschine und/oder ein auf das Rührgefäß aufsetzbarer Deckel des Rührgefäßes zumindest einen elektrischen Kontakt aufweist, um eine elektrische Verbindung zu einem elektrischen Stromkreis der Küchenmaschine im eingesetzten und/oder aufgesetzten Zustand herzustellen, vorzugsweise zur Energieversorgung des Sensors und/oder zur Datenübertragung (z. B. von dem Sensor an die Überwachungsvorrichtung), wobei bevorzugt der elektrische Kontakt elektrisch mit dem Sensor, insbesondere sowohl im eingesetzten und/oder aufgesetzten als auch außerhalb des eingesetzten und/oder aufgesetzten Zustands, verbunden ist. Damit kann eine zuverlässige Überwachung des Lebensmittels, insbesondere durch Erfassung der Erfassungsgrößen durch den Sensor, durchgeführt werden. Der Sensor ist dabei bspw. der erste Sensor und/oder der zweite Sensor und/oder ein weiterer Sensor.

Es kann weiter möglich sein, dass der mindestens eine Ansteuerungswert und/oder der mindestens eine Ansteuerungsparameter in Abhängigkeit von der Ansteuerung bzw. einer Einstellung und/oder Benutzereingabe zur Ansteuerung der mindestens einen Bearbeitungsvorrichtung bzw. des mindestens einen Bearbeitungswerkzeugs, insbesondere eines Rührwerks und/oder eines Heizelements und/oder dergleichen, ermittelt bzw. erfasst werden. Insbesondere umfasst der Ansteuerungsparameter die (einzustellende) Temperatur des Heizelements und/oder die Drehzahl und/oder -richtung des Rührwerks und/oder die zeitliche Aktivierungsdauer einer oder mehrerer Zubereitungsschritte (Verarbeitungsschritte), welche bspw. jeweils wiederum verschiedene Werte für Ansteuerungsparameter aufweisen können.

Bevorzugt umfasst der Ergebnisparameter eine erfassbare Größe, welche z. B. dem Ansteuerungsparameter und/oder der Erfassungsgröße entspricht und/oder davon unterschiedlich ist, z. B. auch eine optische Aufzeichnung des Lebensmittels und/oder ein Motorstrom eines Motors für ein Rührwerk der Küchenmaschine und/oder dergleichen.

Es ist ferner denkbar, dass die Küchenmaschine zumindest die eine und/oder mindestens zwei und/oder mindestens drei und/oder mehrere Bearbeitungsvorrichtungen aufweist, welche bevorzugt jeweils mindestens ein Bearbeitungswerkzeug umfassen, vorzugsweise zumindest ein Rührwerk und/oder mindestens ein Heizelement. Insbesondere kann jede Bearbeitungsvorrichtung jeweils einen Sensor umfassen, wobei sich die jeweiligen Sensoren z. B. voneinander unterscheiden, um bspw. jeweils eine andere Erfassungsgröße ermitteln zu können. Weiter kann es vorgesehen sein, dass die Bearbeitungsvorrichtung zumindest einen elektrischen Motor (z. B. Elektromotor), bevorzugt zum Betreiben des Rührwerks umfasst. Zudem kann die Bearbeitungsvorrichtung vorzugsweise mindestens einen Temperatursensor und/oder mindestens eine Waage und/oder mindestens einen Stromsensor und/oder mindestens einen Spannungssensor umfassen, wobei die jeweiligen Bearbeitungsvorrichtungen auch unterschiedlich voneinander ausgebildet sein können. Bspw. ist eine erste Bearbeitungsvorrichtung vorgesehen, welche das Rührwerk umfasst, und eine zweite Bearbeitungsvorrichtung vorgesehen, welche insbesondere das Heizelement und/oder den Temperatursensor umfasst. Ferner umfasst die Küchenmaschine vorzugsweise ein Gehäuse, welches eine Aufnahme für ein Rührgefäß aufweist. Das Rührgefäß ist bspw. durch einen Deckel verschließbar und weist insbesondere einen Handgriff auf. Insbesondere ist das zuzubereitende Lebensmittel in das Rührgefäß einfüllbar und/oder aufnehmbar. Das Rührwerk und/oder das Heizelement sind bevorzugt im Inneren des Rührgefäßes angeordnet, und können insbesondere auf das Lebensmittel im Rührgefäß einwirken. Auch kann es vorgesehen sein, dass die Küchenmaschine zumindest ein Bedienfeld aufweist, welches vorzugsweise mindestens ein Display, bevorzugt einen Touchscreen, umfasst. Das Display wird dabei bspw. als Eingabe- und/oder als Ausgabemittel für einen Bediener der Küchenmaschine eingesetzt und dient damit insbesondere zur Bedienereingabe. Auch können ggf. weitere Eingabemittel, wie ein Drehregler und/oder ein Stellschalter und/oder dergleichen vorgesehen sein. Über das Bedienfeld, insbesondere über das Display in Verbindung mit den weiteren Eingabemitteln, kann ein Bediener der Küchenmaschine bspw. Ansteuerungsparameter und/oder Betriebsparameter, wie die Rührwerksdrehzahl und/oder die Heiztemperatur und/oder die Zeitdauer für den Rührvorgang (Rührdauer) und/oder verschiedene Programme für die Zubereitung einstellen und/oder aktivieren und/oder deaktivieren. Auch ist es denkbar, dass das Bedienfeld und/oder die Küchenmaschine derart ausgeführt ist, dass über den Touchscreen der einzustellende Betriebsparameter und/oder eine Rezeptauswahl auswählbar ist und/oder über das weitere Eingabemittel der Wert für den ausgewählten Betriebsparameter und/oder ein konkretes Rezept einstellbar/auswählbar ist. Weiter kann es auch möglich sein, dass über die Bedienereingabe die Zubereitungsaufzeichnung auswählbar und/oder veränderbar und/oder löschbar ist.

Weiter ist es insbesondere möglich, dass der Bediener über das Bedienfeld das Lebensmittel (d. h. insbesondere die Art des Lebensmittels) und/oder der Zubereitung und/oder das Rezept für die Küchenmaschine einstellen kann. Weiter kann es vorgesehen sein, dass der Bediener, insbesondere über das Bedienfeld und/oder die weiteren Eingabemittel, den Zubereitungsbetrieb (und/oder einen bestimmten Zubereitungsschritt) der Küchenmaschine aktiveren und/oder deaktivieren kann. In dem Zubereitungsbetrieb wird bspw. das Rührwerk und/oder ein Motor zum Betreiben des Rührwerks gestartet, vorzugsweise für eine bestimmte zeitliche Rührdauer (Zubereitungsdauer). Insbesondere kann (z. B. spätestens) nach dieser vorbestimmten Rührdauer der Zubereitungsbetrieb und/oder ein bestimmter Zubereitungsschritt deaktiviert werden, wodurch auch der Betrieb des Rührwerks und/oder des Motors beendet werden. Danach können bspw. weitere Zubereitungsschritte folgen. Vorzugsweise ist bei einem aktivierten Zubereitungsbetrieb die Rührwerksdrehzahl größer als 0 und bei deaktiviertem Zubereitungsbetrieb die Rührwerksdrehzahl gleich 0. Die Deaktivierung des Zubereitungsbetriebs und/oder die Einstellung von Ansteuerungs- und/oder Zubereitungsparametern und/oder Betriebsparametern, insbesondere der Rührwerksdrehzahl und/oder der Dauer des Rührvorgangs, kann dabei bspw. manuell und/oder (teilweise) automatisch, bspw. programmgesteuert und/oder rezeptabhängig (bspw. in Abhängigkeit vom ausgewählten Rezept) und/oder lebensmittelabhängig (z. B. in Abhängigkeit vom Zustand des Lebensmittels), erfolgen. Dies ermöglicht somit insbesondere die zumindest teilweise automatische Zubereitung des Lebensmittels.

Es ist weiter denkbar, dass die Erfassungsgröße und/oder der Zubereitungsparameter (und/oder der Ansteuerungsparameter) dem Betriebsparameter entspricht und/oder den Betriebsparameter umfasst, und/oder die Erfassungsgröße und/oder der Erfassungswert vom Betriebsparameter abhängig ist. Das Rezept (die Rezeptinformation) und/oder jedes eingestellte Lebensmittel umfasst vorzugsweise mindestens ein (digital gespeichertes) Programm für die Zubereitung.

Bevorzugt umfasst die Küchenmaschine und/oder eine mobile Vorrichtung (wie ein mobiler Datenspeicher oder Rezeptchip) für die Küchenmaschine eine nicht-flüchtige Datenspeichereinheit, in welcher Zubereitungsparameter und/oder zumindest eine Zubereitungsaufzeichnung und/oder eine Erfassungsgrößenauswahl und/oder voreingestellte Betriebsparameter und/oder Programme und/oder Rezepte gespeichert sind, welche bspw. in Abhängigkeit von einer Eingabe des Bedieners ausgewählt werden. Diese Betriebsparameter umfassen dabei insbesondere auch Ansteuerungsparameter, bspw. die Rührwerksdrehzahl und/oder die Werte für elektrische Parameter zur Ansteuerung des Motors des Rührwerks, um eine bestimmte Rührwerksdrehzahl zu erzielen. Die Zubereitungsparameter umfassen dabei vorzugsweise zumindest teilweise die Betriebsparameter und/oder Ansteuerungsparameter und/oder weitere Parameter, welche für die Zubereitung von Relevanz sind. Insbesondere umfassen die Zubereitungsparameter jeweils Informationen über z. B.:
- Eigenschaften der Küchenmaschine und/oder der Ansteuerung und/oder Erfassungsgrößen und/oder physikalische Größen, welche für die Zubereitung des Lebensmittels relevant sind und/oder von einem Zustand der Zubereitung abhängig sind,
- die Art der zu erfassenden Erfassungsgrößen, wie ein Motorsignal des Motors des Rührwerks, welches insbesondere von der Ansteuerung des Motors und/oder von der Drehzahl und/oder dem Drehmoment des Rührwerks abhängig ist,
- die Anzahl der zu erfassenden Erfassungsgrößen.

Bevorzugt kann das zubereitete und/oder zuzubereitende (d. h. für die Zubereitung vorgesehene und/oder in die Küchenmaschine eingefüllte) Lebensmittel zumindest eine der folgenden Lebensmittel umfassen, wobei z. B. in Abhängigkeit von dem Lebensmittel eine Zubereitungsaufzeichnung ausgewählt wird und/oder eine Erfassungsgrößenauswahl erfolgt:
- Nudeln,
- Reis,
- (gedünstete und/oder geröstete) Zwiebeln,
- Schlagsahne,
- Teig,
- Saucen und/oder Emulsionen,
- Eismasse.

Die Überwachungsvorrichtung weist insbesondere eine Erfassungsvorrichtung und/oder den mindestens einen Sensor auf, um Erfassungswerte bspw. an dem Antrieb zu erfassen und/oder die Erfassungsgrößen zu erfassen. Hierzu kann die Überwachungsvorrichtung auch zumindest einen oder mehrere Sensoren aufweisen, welche in der Küchenmaschine integriert sind und/oder an der Küchenmaschine angeordnet sind. Der Sensor und/oder die Sensoren können dabei jeweils bspw. als Temperatursensor und/oder Spannungssensor und/oder Stromsensor und/oder Drehzahlsensor und/oder Drehmomentsensor ausgebildet sein. Entsprechend sind die Erfassungswerte bspw. als Spannungserfassungswerte und/oder Stromerfassungswerte und/oder Drehmomenterfassungswerte und/oder Drehzahlerfassungswerte und/oder Temperaturerfassungswerte ausgeführt. Dies hat den Vorteil, dass zuverlässig die relevanten Erfassungswerte ermittelt werden können.

Vorzugsweise ist auch ein dritter Sensor zur Erfassung einer dritten Erfassungsgröße und/oder ein vierter Sensor zur Erfassung einer vierten Erfassungsgröße und/oder weitere Sensoren zur Erfassung weiterer Erfassungsgrößen vorgesehen.

Gemäß einem weiteren Vorteil kann vorgesehen sein, dass die Bearbeitungsvorrichtung und/oder die Überwachungsvorrichtung in der Küchenmaschine integriert ist, und insbesondere die Ermittlung der Erfassungswerte direkt durch Erfassung der Erfassungsgrößen an der Bearbeitungsvorrichtung innerhalb Küchenmaschine erfolgt. Bspw. können die Bearbeitungsvorrichtung und/oder die Überwachungsvorrichtung innerhalb eines Gehäuses (und/oder zumindest teilweise an dem Gehäuse) der Küchenmaschine angeordnet sein und/oder fest mit weiteren Bestandteilen der Küchenmaschine verbunden sein.

Es ist ferner denkbar, dass die Überwachungsvorrichtung eine elektrische und/oder elektronische Verarbeitungsvorrichtung aufweist, und/oder dass die Verarbeitungsvorrichtung und/oder die Überwachungsvorrichtung zumindest eine Elektronikkomponente aufweist. Die Elektronikkomponente umfasst bspw. einen Mikroprozessor und/oder einen digitalen Signalprozessor und/oder einen nicht-flüchtigen Datenspeichereinheit und/oder eine Anwendungsspezifische integrierte Schaltung (ASIC) und/oder ein Field Programmable Gate Array (FPGA) und/oder dergleichen. Insbesondere umfasst die Elektronikkomponente und/oder ein mit der Überwachungsvorrichtung verbundener oder darin integrierter Sensor, auch ggf. einen Analog-Digital-Wandler, welcher bspw. zur Erfassung der Erfassungsgröße dient.

Ebenfalls Gegenstand der Erfindung ist ein Computerprogrammprodukt zum Betreiben einer Küchenmaschine, insbesondere einer erfindungsgemäßen Küchenmaschine. Hierbei ist vorgesehen, dass das Computerprogrammprodukt dazu ausgeführt ist, ein erfindungsgemäßes Verfahren durchzuführen. Damit bringt das erfindungsgemäße Computerprogrammprodukt die gleichen Vorteile mit sich, wie sie ausführlich mit Bezug auf ein erfindungsgemäßes Verfahren und eine erfindungsgemäße Küchenmaschine beschrieben worden sind. Zudem kann ein erfindungsgemäßes Computerprogrammprodukt geeignet sein, durch eine Verarbeitungsvorrichtung einer erfindungsgemäßen Küchenmaschine ausgelesen und/oder ausgeführt zu werden, insbesondere zur Durchführung des erfindungsgemäßen Verfahrens. Ein erfindungsgemäßes Computerprogrammprodukt ist bspw. eine Firmware, welche vorzugsweise zum Betreiben der erfindungsgemäßen Küchenmaschine eingesetzt wird und/oder digital an die Küchenmaschine bzw. die Datenspeichereinheit und/oder Verarbeitungsvorrichtung übertragbar ist. Weiter kann das erfindungsgemäße Computerprogrammprodukt auch als digitales Speichermedium, insbesondere als Flash-Speicher und/oder digitales optisches Speichermedium, wie eine CD und/oder DVD und/oder Blu-ray, ausgeführt sein.

Ebenfalls Gegenstand der Erfindung ist eine Verwendung einer Küchenmaschine, insbesondere einer erfindungsgemäßen Küchenmaschine, und/oder gemäß einem erfindungsgemäßen Verfahren. Dabei erfolgt insbesondere die Verwendung der Küchenmaschine zur Aufzeichnung einer zumindest teilweise automatischen (automatisierten) Zubereitung von mindestens einem (zuzubereitenden) Lebensmittelt, insbesondere durch eine Zubereitungsaufzeichnung. Die Aufzeichnung erfolgt dabei bspw. digital und/oder persistent und/oder durch die Küchenmaschine reproduzierbar. Damit bringt die erfindungsgemäße Verwendung die gleichen Vorteile mit sich, wie sie zuvor mit Bezug auf eine erfindungsgemäße Küchenmaschine und/oder ein erfindungsgemäßes Computerprogrammprodukt oder ein erfindungsgemäßes Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer erfindungsgemäßen Küchenmaschine,
- Figur 2: eine weitere schematische Darstellung einer erfindungsgemäßen Küchenmaschine, und
- Figur 3-5: schematische Darstellungen zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

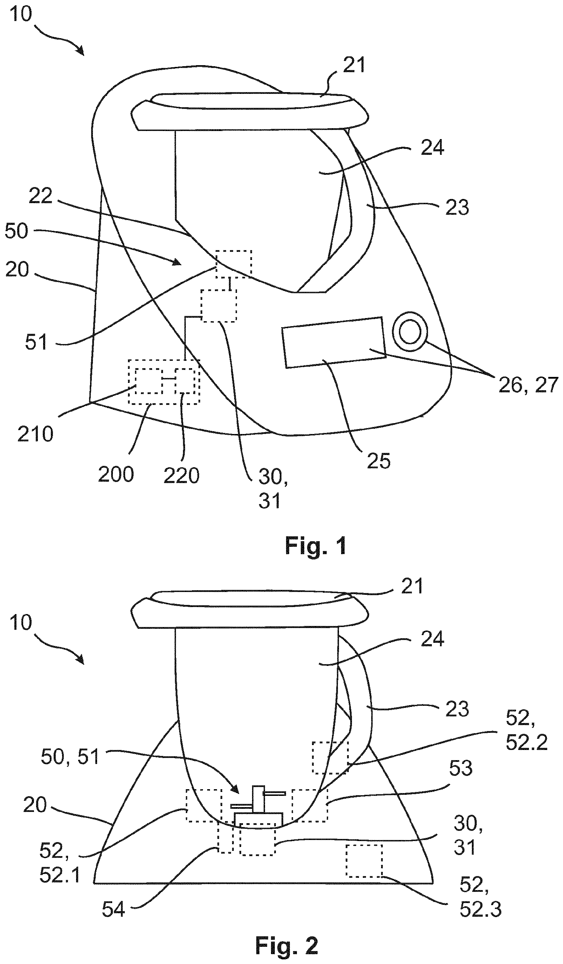

In Figur 1 und 2 ist schematisch eine erfindungsgemäße Küchenmaschine 10 gezeigt. Die Küchenmaschine 10 umfasst ein Gehäuse 20, welches eine Aufnahme 22 für ein Rührgefäß 24 aufweist. Das Rührgefäß 24 ist dabei bspw. durch einen Deckel 21 verschließbar, und weist vorzugsweise einen Handgriff 23 auf. Ein Rührwerk 51 und/oder ein Heizelement 53 und/oder mindestens ein Sensor 52 ist bevorzugt im Bereich des Rührgefäßes 24 und/oder im Inneren des Rührgefäßes 24 angeordnet. Weiter können auch ein erster Sensor 52.1 und ein zweiter Sensor 52.2 sowie ein dritter Sensor 52.3 vorgesehen sein, welche jeweils z. B. an unterschiedlichen Bereichen der Küchenmaschine 10, innerhalb oder außerhalb der Küchenmaschine 10, zur Erfassung unterschiedlicher Erfassungsgrößen, angeordnet sind. Zudem umfasst die Küchenmaschine 10 ein Bedienfeld 26, welches bspw. ein Display 25, vorzugsweise einen Touchscreen 25, umfasst. Insbesondere dient das Bedienfeld 26 als Eingabevorrichtung 27. Hierbei dient das Display 25 insbesondere sowohl als Eingabe- als auch als Ausgabemittel. Über das Bedienfeld 26 wird insbesondere ermöglicht, dass ein Bediener der Küchenmaschine 10 Zubereitungsparameter und/oder Rezepte und/oder Betriebsparameter, wie die Rührwerksdrehzahl, die Heiztemperatur und/oder die Zeitdauer der Zubereitung bzw. des Rührens und/oder verschiedene Programme der Küchenmaschine 10, einstellen und/oder aktivieren und/oder deaktivieren kann. Weiter kann über das Display 25 auch die Ausgabe von rezeptbezogenen Anweisungen und/oder Hinweisen und/oder grafischen Bedienelementen erfolgen. Über die grafischen Bedienelemente, welche bevorzugt Bestandteil einer grafischen Benutzeroberfläche sind, kann als Eingabemittel eine Bedienung der erfindungsgemäßen Küchenmaschine 10 durchgeführt werden. Die Rezepte sind bspw. in einem nicht-flüchtigen Datenspeicher 220 der Küchenmaschine 10 gespeichert. Insbesondere ermöglicht das Eingabemittel auch die Aktivierung und/oder Deaktivierung eines Zubereitungsbetriebs und/oder die Einstellung der Art der Zubereitung und/oder der Art des zuzubereitenden Lebensmittels und/oder (direkt oder indirekt) der Art bzw. Anzahl der zu erfassenden Erfassungsgrößen und/oder die Auswahl einer Zubereitungsaufzeichnung 110.

Wie in den Figuren 1 und 2 dargestellt ist, umfasst die Küchenmaschine 10 zumindest eine Bearbeitungsvorrichtung 50, welche insbesondere zumindest ein Bearbeitungswerkzeug 51, wie ein Rührwerk 51, umfasst. Zur Überwachung und/oder Ansteuerung, insbesondere der Bearbeitungsvorrichtungen 50, ist außerdem mindestens eine Überwachungsvorrichtung 200 vorgesehen, welche z. B. eine Verarbeitungsvorrichtung 210 und/oder den Datenspeicher 220 umfasst. Weiter kann es vorgesehen sein, dass die Bearbeitungsvorrichtung 50 und/oder weitere Bearbeitungsvorrichtungen 50 den zumindest einen Sensor 52 und/oder eine Heizung 53 und/oder eine Waage 54 umfassen, welche bspw. in der Küchenmaschine 10 integriert sind. Die Waage 54 dient insbesondere dazu, eine Gewichtskraft auf das Rührgefäß 24 zu erfassen bzw. zu messen. Hierzu wird das Wägeobjekt bspw. auf und/oder in das Rührgefäß 24 gelegt und/oder eingefüllt. Die Heizung 53 ist bspw. derart ausgestaltet, dass das Lebensmittel im Rührgefäß 24 durch die Heizung 53 erhitzt werden kann, vorzugsweise bis auf Temperaturen in einem Bereich von 10°C bis 150°C, vorzugsweise 30°C bis 120°C.

In Figur 2 ist zudem schematisch ein Antrieb 30 der Küchenmaschine 10 gezeigt, welcher einen (elektrischen) Motor 31 aufweist. Dabei ist der Antrieb 30 und/oder der Motor 31 derart mit zumindest einer Bearbeitungsvorrichtung 50 und/oder mit zumindest einem Bearbeitungswerkzeug 51, insbesondere dem Rührwerk 51, verbunden, dass eine Kraftübertragung von dem Motor 31 und/oder einer Antriebswelle des Antriebs 30 an die Bearbeitungsvorrichtung 50 und/oder das Bearbeitungswerkzeug 51 und/oder das Rührwerk 51 durchgeführt wird. Es kann vorgesehen sein, dass die Überwachungsvorrichtung 200 zur Überwachung elektrisch zumindest mit dem Sensor 52 und/oder der Bearbeitungsvorrichtung 50 und/oder dem Antrieb 30 und/oder dem Motor 31 des Antriebs 30 verbunden ist.

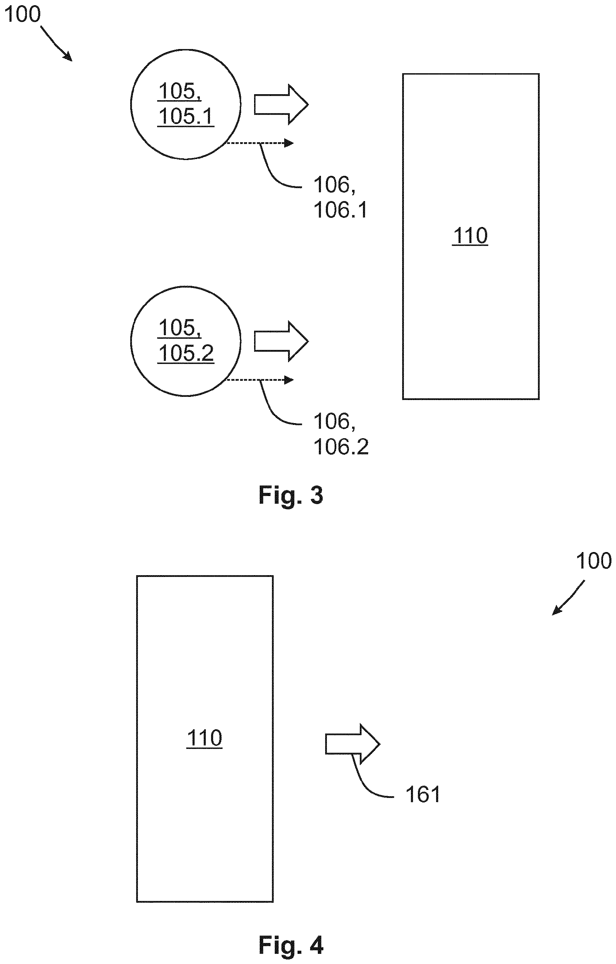

In den Figuren 3 bis 5 ist schematisch ein erfindungsgemäßes Verfahren 100 visualisiert. Gemäß Figur 3 ist erkennbar, dass zur Erstellung einer Zubereitungsaufzeichnung 110 von einer aufgezeichneten Zubereitung ein erfindungsgemäßes Verfahren durchgeführt werden kann. Hierzu erfolgt eine Erfassung 105 von verschiedenen Erfassungsgrößen, insbesondere von Ansteuerungsparametern und/oder Ergebnisparametern. Bspw. wird durch eine erste Erfassung 105.1 von mind. einem Ansteuerungsparameter während des Zubereitungsbetriebs mind. ein Ansteuerungswert 106.1 ermittelt. Weiter wird durch eine zweite Erfassung 105.2 von mind. einem Ergebnisparameter mind. ein Ergebniswert 106.2 ermittelt.

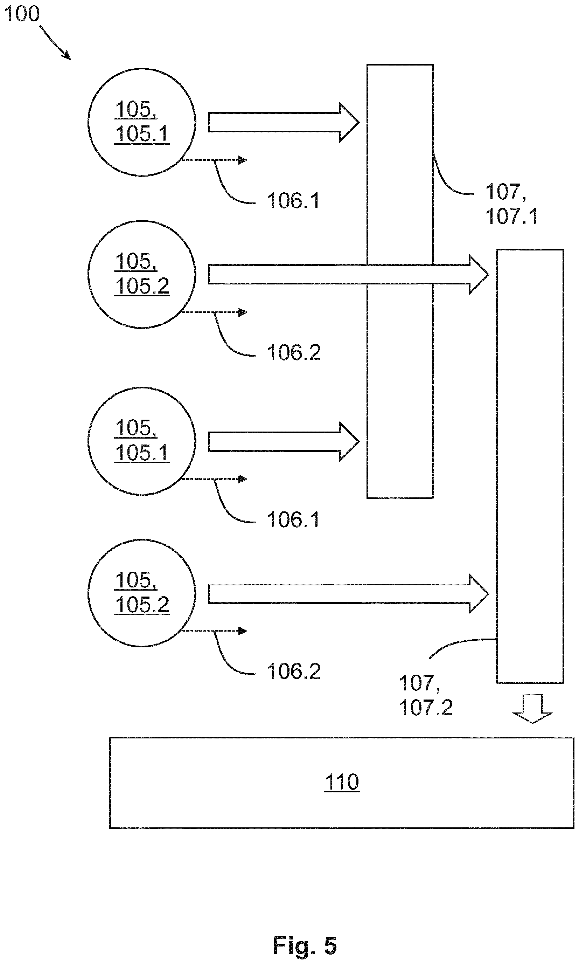

Auch ist es denkbar, dass ein Verlauf 107 der Erfassungswerte 106, welche durch die Erfassung 105 ermittelt werden, ermittelt und/oder aufgezeichnet wird. So kann bspw., wie in Figur 5 visualisiert ist, ein erster Verlauf 107.1 der Ansteuerungswerte 106.1 und/oder ein zweiter Verlauf 107.2 der Ergebniswerte 106.2 ermittelt werden. Bei diesem Verlauf 107 handelt es sich bspw. um einen zeitlichen Verlauf der Erfassungswerte 106, insbesondere einen Temperaturverlauf oder dergleichen.

Die ermittelten Erfassungswerte 106, insbesondere die Ansteuerungswerte 106.1 und/oder die Ergebniswerte 106.2, werden anschließend in einer Zubereitungsaufzeichnung 110 aufgezeichnet und damit (dauerhaft bzw. persistent) gespeichert. Unter der persistenten Speicherung wird insbesondere verstanden, dass die Zubereitungsaufzeichnung 110 auch nach einem Ausschalten der Küchenmaschine 10 gespeichert bleibt. Hierzu kann eine nicht-flüchtige Datenspeichereinheit 220 der Küchenmaschine 10 vorgesehen sein. Die Datenspeichereinheit 220 ist dabei bspw. als Flash-Speicher oder dergleichen ausgebildet. Alternativ oder zusätzlich kann es möglich sein, dass der Verlauf 107, insbesondere der erste Verlauf 107.1 und/oder der zweite Verlauf 107.2, in der Zubereitungsaufzeichnung 110 gespeichert wird.

Durch die gemäß Figur 3 und/oder Figur 5 gezeigten Verfahrensschritte eines erfindungsgemäßen Verfahrens 100 ist es z. B. möglich, nach der Initiierung einer aufzuzeichnenden Zubereitung die einzelnen Zubereitungsschritte und/oder die dabei verwendeten Ansteuerungsparameter und/oder die Ergebnisse der Zubereitung für eine spätere Verwendung aufzuzeichnen. So kann es z. B. möglich sein, dass ein Bediener der Küchenmaschine 10 die zumindest tlw. automatische Zubereitung dazu nutzt, um bspw. Röstzwiebeln herzustellen und/oder einen Teig zuzubereiten. Die Zubereitung umfasst somit insbesondere mehrere Zubereitungsschritte, welche bspw. Parameter umfassen, wie insbesondere die Spezifizierung des Einfüllen von Lebensmitteln (wie z. B. der Zwiebeln oder von Körnern), und/oder das Einstellen einer bestimmten Temperatur eines Heizelementes 53 der Küchenmaschine 10, und/oder der Einstellung einer bestimmten Drehzahl oder Drehrichtung eines Rührwerks 51 der Küchenmaschine 10, und/oder der Einstellung einer bestimmten Zubereitungsdauer des einzelnen Zubereitungsschrittes, und/oder sonstiger Parameter zur Steuerung einer Bearbeitungsvorrichtung 50 der Küchenmaschine 10, oder dergleichen. Diese Parameter der Zubereitungsschritte können bspw. anhand der Ansteuerungsparameter und/oder Ergebnisparameter erfasst und/oder durch die Ermittlung und Aufzeichnung der Ansteuerungswerte 106.1 und/oder der Ergebniswerte 106.2 für die spätere Verwendung in der Zubereitungsaufzeichnung aufgezeichnet werden. Damit werden dann z. B. diese aufgezeichneten Zubereitungsschritte der aufgezeichneten Zubereitung ganz oder tlw. bei der späteren Verwendung in einem weiteren Zubereitungsbetrieb reproduzierbar.

Der Ansteuerungsparameter ist dabei insbesondere für die Zubereitung spezifisch, sodass vorzugsweise eine Veränderung der Ansteuerungsparameter die Zubereitung und/oder das Ergebnis der Zubereitung verändert. Der Ergebnisparameter ist insbesondere für das Ergebnis der Zubereitung spezifisch, sodass vorzugsweise anhand des Ergebnisparameters das Ergebnis (z. B. die Qualität) der Zubereitung beurteilt werden kann. Hierzu können bspw. auch Analysemethoden oder dergleichen zum Einsatz kommen, welche insbesondere durch die Verarbeitungsvorrichtung 210 der Küchenmaschine 10 durchgeführt werden. Der Ergebnisparameter ist dabei bspw. eine visuelle Aufzeichnung des Lebensmittels und/oder eine Bedienereingabe und/oder dergleichen. Im weiteren Sinne wird unter dem Ergebnis auch die Zubereitungsdauer eines einzelnen Zubereitungsschrittes und/oder die gesamte Zubereitungsdauer sämtlicher Zubereitungsschritte verstanden, sodass der Ergebnisparameter insbesondere auch eine Bedienereingabe betreffen bzw. davon abhängig sein kann, durch welche der Zubereitungsschritt und/oder die gesamte aufgezeichnete Zubereitung beendet wurde. Bspw. führt der Bediener die aufzuzeichnende Zubereitung durch, um Röstzwiebeln herzustellen. Der Röstgrad ist dabei insbesondere abhängig von div. Parametern wie der verwendeten Temperatur und/oder von dem verwendeten Lebensmittel (d. h. z. B. Art und/oder Beschaffenheit der Zwiebeln) und/oder von der Zubereitungsdauer. Diese Parameter können bspw. durch eine Rezeptinformation vorgegeben sein, es ist aber auch denkbar, dass der Bediener in Abweichung von der Rezeptinformation diese Parameter selbst anpasst und/oder beeinflusst. Dies kann bspw. durch ein vorzeitiges Beenden der Zubereitung und damit durch eine benutzerspezifische Verkürzung der Zubereitungsdauer erfolgen. Alternativ oder zusätzlich ist es denkbar, dass auch eine Anpassung automatisiert erfolgt, z. B. durch die Berücksichtigung von Umwelteinflüssen. Nun kann es durch die Erfassung des mind. einen Ansteuerungsparameters und/oder des mind. einen Ergebnisparameters möglich sein, diese Anpassung der Parameter (z. B. durch den Bediener und/oder durch Umwelteinflüsse) zu bestimmen. Hierzu wird bspw. anhand des Ergebniswertes 106.2 bzw. des Ergebnisparameters festgestellt, welche Anpassung erfolgt, z. B. wann die Zubereitung und/oder der Zubereitungsschritt beendet wurde.

In Figur 4 ist schematisch die Reproduzierung der Zubereitungsaufzeichnung 110 dargestellt. Hierzu wird bspw. eine weitere Zubereitung durch die Auswertung der Zubereitungsaufzeichnung 110 und/oder durch das Ausgeben von mind. einem Steuerungssignal 161 in Abhängigkeit von dieser Auswertung in ähnlicher Weise oder in gleicher Weise angepasst, wie dies bei der aufgezeichneten Zubereitung erfolgt ist. Bspw. kann somit die aufgezeichnete Zubereitung wiederholt werden und/oder das Ergebnis der aufgezeichneten Zubereitung reproduziert werden. Bspw. kann eine bei der aufgezeichneten Zubereitung durch eine Bedienereingabe verursachte Verkürzung der Zubereitung nun auch bei der weiteren Zubereitung durchgeführt werden. Dies dient z. B. dazu, eine benutzerindividuelle Anpassung der Zubereitung zu berücksichtigen, z. B. eine Veränderung des Mahlgrades und/oder des Röstgrades, welche durch die vorzeitige Beendigung des Zubereitungsschrittes verursacht wurde.

Auch ist es denkbar, dass die weitere Zubereitung dahingehend angepasst wird, insbesondere durch eine zumindest teilweise automatische Anpassung der Zubereitungsschritte, dass ein vorgegebenes Zubereitungsergebnis reproduziert wird. Das Zubereitungsergebnis wird z. B. anhand der Zubereitungsaufzeichnung 110 bestimmt. Somit ist es also möglich, dass nicht (nur) die aufgezeichneten Zubereitungsschritte entsprechend der Aufzeichnung unverändert übernommen werden, sondern die Zubereitungsschritte der weiteren Zubereitung (während der weiteren Zubereitung) z. B. anhand einer Auswertung so angepasst werden, dass möglichst das vorgegebene Zubereitungsergebnis erzielt wird. Die Zubereitungsschritte sind damit abhängig von dem vorgegebenen Zubereitungsergebnis bzw. vom aufgezeichneten Ergebniswert 106.2. Dies hat den Vorteil, dass auch unter unterschiedlichen Umgebungsbedingungen, welche das Lebensmittel und die Zubereitung beeinflussen, die Reproduktion des vom Benutzer gewünschten Ergebnisses möglich ist. Wird z. B. während der weiteren Zubereitung festgestellt, dass die gemäß dem Zubereitungsergebnis gewünschte Konsistenz des Lebensmittels (oder der Röstgrad oder dergleichen) bereits vorher erreicht wird, obwohl die aufgezeichnete Zubereitungsdauer (gemäß dem aufgezeichneten Ansteuerungswert 106.1) noch nicht erreicht ist, so wird der aktuelle Zubereitungsschritt der weiteren Zubereitung dahingehend angepasst, dass die Zubereitungsdauer verkürzt wird, um das gewünschte Ergebnis zu erhalten. Dies wäre bei einer reinen Reproduktion der aufgezeichneten Zubereitungsschritte (z. B. anhand des aufgezeichneten Ansteuerungswerts 106.1) nicht möglich. Selbstverständlich kann auch eine Kombination der Anpassung anhand des Ansteuerungswertes 106.1 (also anhand der Zubereitungsschritte) und anhand des Ergebniswerts 106.2 (also anhand des Zubereitungsergebnisses) erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den durch die nachfolgenden Ansprüche definierten Rahmen der vorliegenden Erfindung zu verlassen.

### Bezuaszeichenliste

- 10: Küchenmaschine

- 20: Gehäuse
- 21: Deckel
- 22: Rührgefäß-Aufnahme
- 23: Handgriff
- 24: Rührgefäß
- 25: Display
- 26: Bedienfeld
- 27: Eingabevorrichtung

- 30: Antrieb
- 31: Motor

- 50: Bearbeitungsvorrichtung
- 51: Bearbeitungswerkzeug, Rührwerk
- 52: Sensor
- 52.1: erster Sensor
- 52.2: zweiter Sensor
- 52.3: dritter Sensor
- 53: Heizelement
- 54: Waage

- 100: Verfahren
- 105: Erfassung
- 105.1: erste Erfassung
- 105.2: zweite Erfassung
- 106: Erfassungswerte
- 106.1: erste Erfassungswerte, Ansteuerungswert
- 106.2: zweite Erfassungswerte, Ergebniswert
- 107: Verlauf
- 107.1: erster Verlauf
- 107.2: zweiter Verlauf
- 110: Zubereitungsaufzeichnung

- 161: Steuerungssignals

- 200: Überwachungsvorrichtung
- 210: Verarbeitungsvorrichtung

- 220: Nicht-flüchtiger Datenspeichereinheit

## Patentansprüche

1. Verfahren (100) zum Betreiben einer Küchenmaschine (10), wobei in einem Zubereitungsbetrieb mindestens eine Bearbeitungsvorrichtung (50) der Küchenmaschine (10) zur zumindest teilweise automatischen Zubereitung von mindestens einem Lebensmittel angesteuert wird,
**gekennzeichnet durch die nachfolgenden Schritte:**
a) Ermitteln von mindestens einem Ansteuerungswert (106.1) durch eine erste Erfassung (105.1) von mindestens einem Ansteuerungsparameter während des Zubereitungsbetriebs, wobei der Ansteuerungsparameter für die Zubereitung spezifisch ist,
b) Ermitteln von mindestens einem Ergebniswert (106.2) durch eine zweite Erfassung (105.2) von mindestens einem Ergebnisparameter, wobei der Ergebnisparameter für das Ergebnis der Zubereitung spezifisch ist,
c) Aufzeichnen des Ansteuerungswertes (106.1) und des Ergebniswertes (106.2) in einer Zubereitungsaufzeichnung (110), sodass diese der Zubereitung als eine aufgezeichnete Zubereitung zugeordnet ist.

2. Verfahren (100) nach Anspruch 1,
**dadurch gekennzeichnet,**
**dass** zumindest die nachfolgenden Schritte nach Schritt c) durchgeführt werden:
d) Auswerten der Zubereitungsaufzeichnung (110), insbesondere wenn ein weiterer Zubereitungsbetrieb für eine weitere Zubereitung initiiert wird, insbesondere wenn eine Rezeptauswahl erfolgt,
e) Ausgeben von mindestens einem Steuerungssignal (161) zur Beeinflussung des weiteren Zubereitungsbetriebs in Abhängigkeit von der Auswertung, sodass die weitere Zubereitung angepasst an die Zubereitungsaufzeichnung (110) erfolgt, vorzugsweise derart, dass das Ergebnis der aufgezeichneten Zubereitung reproduziert wird.

3. Verfahren (100) nach Anspruch 1 oder 2,
**dadurch gekennzeichnet,**
**dass** der aufgezeichnete Ansteuerungswert (106.1) und/oder der aufgezeichnete Ergebniswert (106.2) zumindest einem Zubereitungsschritt im Zubereitungsbetrieb zugeordnet wird, wobei
eine zumindest teilweise automatische Adaptierung des zugeordneten Zubereitungsschrittes, insbesondere einer Zubereitungsdauer, vorzugsweise einer Rührdauer, und/oder des oder eines weiteren Ansteuerungsparameters, in einem weiteren Zubereitungsbetrieb anhand der Zubereitungsaufzeichnung (110) erfolgt
und/oder dass zur Initiierung des, insbesondere mindestens einen weiteren, Zubereitungsbetriebs eine Rezeptauswahl durchgeführt wird, und eine Adaptierung des Zubereitungsbetriebs anhand der Zubereitungsaufzeichnung (110) nur dann erfolgt, wenn eine durch die Zubereitungsaufzeichnung (110) vorgegebene Rezeptauswahl für die aufgezeichnete Zubereitung der durchgeführten Rezeptauswahl entspricht.

4. Verfahren (100) nach einem der vorhergehenden Ansprüche,
**dadurch gekennzeichnet,**
**dass** während zumindest eines weiteren Zubereitungsbetriebs, insbesondere bei entsprechender Rezeptauswahl, eine Überwachung der Ergebnisparameter und/oder Ansteuerungsparameter zur Ermittlung von Überwachungswerten erfolgt, wobei die Überwachungswerte mit den Werten der, insbesondere entsprechenden, Zubereitungsaufzeichnung (110) verglichen werden, und wobei eine weitere Zubereitung im weiteren Zubereitungsbetrieb anhand des Vergleichs angepasst wird, sodass die weitere Zubereitung an die aufgezeichnete Zubereitung angeglichen wird
und/oder dass durch eine Rezeptauswahl eine Rezeptinformation ausgewählt wird, welche zumindest einen Zubereitungsschritt für die Zubereitung im Zubereitungsbetrieb umfasst, wobei bevorzugt die Rezeptauswahl außerhalb des Zubereitungsbetriebs erfolgt, wobei vorzugsweise die Rezeptinformation Daten über die Art und/oder Menge und/oder Qualität des wenigstens einen zuzubereitenden Lebensmittels umfasst.

5. Verfahren (100) nach einem der vorhergehenden Ansprüche,
**dadurch gekennzeichnet,**
**dass** während zumindest eines weiteren Zubereitungsbetriebs, insbesondere bei entsprechender Rezeptauswahl, eine Überwachung der Ergebnisparameter und/oder Ansteuerungsparameter zur Ermittlung von Überwachungswerten erfolgt, wobei die Überwachungswerte mit den Werten der, insbesondere entsprechenden, Zubereitungsaufzeichnung (110) verglichen werden, und wobei die Zubereitungsaufzeichnung (110) anhand des Vergleichs angepasst wird, sodass insbesondere die Zubereitungsaufzeichnung (110) an die weitere Zubereitung angeglichen wird, insbesondere nur dann, wenn ein Qualitätsparameter des Ergebnisses der weiteren Zubereitung einen aufgezeichneten Qualitätsparameter des Ergebnisses der aufgezeichneten Zubereitung übersteigt.

6. Verfahren (100) nach einem der vorhergehenden Ansprüche,
**dadurch gekennzeichnet,**
**dass** die Zubereitungsaufzeichnung (110) mit Informationen über mindestens einen Zubereitungsschritt und/oder über das bei der aufgezeichneten Zubereitung verwendete mindestens eine Lebensmittel ergänzt wird, sodass eine neue Rezeptinformation erstellt wird, wobei die neue Rezeptinformation durch eine Rezeptauswahl ausgewählt wird, um in Abhängigkeit von der Zubereitungsaufzeichnung (110) einen weiteren Zubereitungsbetrieb durchzuführen.

7. Verfahren (100) nach einem der vorhergehenden Ansprüche,
**dadurch gekennzeichnet,**
**dass** gemäß Schritt a) ein zeitlicher erster Verlauf (107.1) des Ansteuerungsparameters erfasst und gemäß Schritt c) aufgezeichnet wird, und/oder gemäß Schritt a) ein zeitlicher zweiter Verlauf (107.2) des Ergebnisparameters erfasst und gemäß Schritt c) aufgezeichnet wird.

8. Verfahren (100) nach einem der vorhergehenden Ansprüche,
**dadurch gekennzeichnet,**
**dass** der Ansteuerungsparameter zumindest einen der folgenden Parameter umfasst:
- eine Temperatur an der Küchenmaschine (10), vorzugsweise eines Heizelements (53),
- eine Geschwindigkeit an der Küchenmaschine (10), vorzugsweise eines Rührwerks (51),
- eine zeitliche Zubereitungsdauer eines einzelnen Zubereitungsschrittes der Zubereitung im Zubereitungsbetrieb,
- eine Menge und/oder Qualität des zubereiteten Lebensmittels,
- eine Drehzahl an der Küchenmaschine (10), vorzugsweise des Rührwerks (51).

9. Verfahren (100) nach einem der vorhergehenden Ansprüche,
**dadurch gekennzeichnet,**
**dass** gemäß Schritt b) zumindest zwei Ergebniswerte (106.2) durch die zweite Erfassung (105.2) von jeweils unterschiedlichen Ergebnisparametern ermittelt werden, wobei vorzugsweise ein erster Ergebnisparameter durch einen ersten Sensor (52.1) und ein zweiter Ergebnisparameter durch einen zweiten Sensor (52.2) an der Küchenmaschine (10) und/oder der Umgebung der Küchenmaschine (10) erfasst werden.

10. Verfahren (100) nach einem der vorhergehenden Ansprüche,
**dadurch gekennzeichnet,**
**dass** die Auswahl der zu erfassenden Ergebnisparameter und/oder Ansteuerungsparameter in einer Parametervorlage gespeichert sind, und die erste und zweite Erfassung (105.1, 105.2) in Abhängigkeit von der Parametervorlage durchgeführt wird, wobei die Parametervorlage vorzugsweise rezeptabhängig ausgelesen wird.

11. Küchenmaschine (10) mit mindestens einer Bearbeitungsvorrichtung (50) und einer Überwachungsvorrichtung (200), wobei
in einem Zubereitungsbetrieb die Bearbeitungsvorrichtung (50) zur zumindest teilweise automatischen Zubereitung von Lebensmitteln ansteuerbar ist, und
die Überwachungsvorrichtung (200) zumindest zwei Sensoren (52) aufweist, und
durch einen ersten Sensor (52.1) mindestens ein Ansteuerungswert (106.1) durch eine erste Erfassung (105.1) von mindestens einem Ansteuerungsparameter an der Küchenmaschine (10) ermittelbar ist, und
durch mindestens einen zweiten Sensor (52.2) mindestens ein Ergebniswert (106.2) durch eine zweite Erfassung (105.2) von mindestens einem Ergebnisparameter an der Küchenmaschine (10) ermittelbar ist,
**dadurch gekennzeichnet,**
**dass** die Überwachungsvorrichtung (200) eine Datenspeichereinheit (220) umfasst, durch welche der Ansteuerungswert (106.1) und der Ergebniswert (106.2) in einer Zubereitungsaufzeichnung (110) speicherbar sind, sodass diese der Zubereitung als eine aufgezeichnete Zubereitung zuordenbar ist.

12. Küchenmaschine (10) nach Anspruch 11,
**dadurch gekennzeichnet,**
**dass** eine Eingabevorrichtung (27) der Küchenmaschine (10) vorgesehen ist, insbesondere ein Bedienfeld (26) und/oder ein Drehregler (26), welche den zweiten und/oder einen dritten Sensor (52.2, 52.3) umfasst, wobei vorzugsweise der Ergebnisparameter zumindest einen der nachfolgenden Parameter umfasst:
- eine Temperatur, insbesondere am zubereiteten Lebensmittel,
- eine visuelle Information des zubereiteten Lebensmittels,
- ein Gewicht des zubereiteten Lebensmittels,
- eine physikalische Größe an der Küchenmaschine (10),
- einen Qualitätsparameter des zubereiteten Lebensmittels,
- einen von der Zubereitung abhängigen Parameter an der Küchenmaschine (10), vorzugsweise einen Motorstrom eines Motors (31) für ein Rührwerk (51) der Küchenmaschine (10),
- eine Benutzereingabe, insbesondere eine manuelle Beendigung eines Zubereitungsschrittes und/oder des Zubereitungsbetriebs.

13. Küchenmaschine (10) nach einem der Ansprüche 11 oder 12,
**dadurch gekennzeichnet,**
**dass** die Küchenmaschine (10) nach einem Verfahren (100) nach einem der Ansprüche 1 bis 10 betreibbar ist.

14. Computerprogrammprodukt zum Betreiben einer Küchenmaschine (10), insbesondere nach einem der Ansprüche 11 bis 13,
**dadurch gekennzeichnet,**
**dass** das Computerprogrammprodukt dazu ausgeführt ist, ein Verfahren (100) nach einem der Ansprüche 1 bis 10 durchzuführen.

15. Verwendung einer Küchenmaschine (10) nach einem der Ansprüche 11 bis 13 zur Aufzeichnung einer zumindest teilweise automatischen Zubereitung von mindestens einem Lebensmittel.

## Claims

1. Method (100) for operating a food processor (10), wherein in a preparation operation at least one processing device (50) of the food processor (10) is actuated for the at least partially automatic preparation of at least one foodstuff,
**characterized by the following steps:**
a) determining at least one control value (106.1) by a first detection (105.1) of at least one control parameter during the preparation operation, the control parameter being specific to the preparation,
b) determining at least one result value (106.2) by a second detection (105.2) of at least one result parameter, wherein the result parameter is specific to the result of the preparation,
c) recording the control value (106.1) and the result value (106.2) in a preparation record (110) so that it is associated with the preparation as a recorded preparation.

2. The method (100) according to claim 1,
**characterized in that**
at least the subsequent steps according to step c) are carried out:
d) evaluating the preparation record (110), in particular when a further preparation operation is initiated for a further preparation, in particular when a recipe selection is made,
e) outputting at least one control signal (161) for influencing the further preparation operation as a function of the evaluation, so that the further preparation is adapted to the preparation record (110), preferably in such a way that the result of the recorded preparation is reproduced.

3. The method (100) according to claim 1 or 2,
**characterized in that**
the recorded control value (106.1) and/or the recorded result value (106.2) is assigned to at least one preparation step in the preparation operation, wherein
an at least partially automatic adaptation of the associated preparation step, in particular of a preparation duration, preferably a stirring duration, and/or of the or a further control parameter, takes place in a further preparation operation on the basis of the preparation record (110)
and/or **in that** a recipe selection is carried out to initiate the, in particular at least one further, preparation operation, and the preparation operation is only adapted on the basis of the preparation record (110) if a recipe selection for the recorded preparation which is predetermined by the preparation record (110) corresponds to the recipe selection carried out.

4. The method (100) according to any one of the preceding claims,
**characterized in that**
during at least one further preparation operation, in particular with corresponding recipe selection, the result parameters and/or control parameters are monitored in order to determine monitoring values, the monitoring values being compared with the values of the, in particular corresponding, preparation record (110), and a further preparation in the further preparation operation being adapted on the basis of the comparison, so that the further preparation is matched to the recorded preparation
and/or **in that** a recipe selection is used to select recipe information which comprises at least one preparation step for the preparation in the preparation operation, the recipe selection preferably taking place outside the preparation operation, the recipe information preferably comprising data on the type and/or quantity and/or quality of the at least one foodstuff to be prepared.

5. The method (100) according to any one of the preceding claims,
**characterized in that**
during at least one further preparation operation, in particular with corresponding recipe selection, the result parameters and/or control parameters are monitored to determine monitoring values, wherein the monitoring values are compared with the values of the, in particular corresponding, preparation record (110), and wherein the preparation record (110) is adapted on the basis of the comparison, so that in particular the preparation record (110) is adapted to the further preparation, in particular only if a quality parameter of the result of the further preparation exceeds a recorded quality parameter of the result of the recorded preparation.

6. The method (100) according to any one of the preceding claims,
**characterized in that**
the preparation record (110) is supplemented with information about at least one preparation step and/or about the at least one foodstuff used in the recorded preparation, so that new recipe information is created, the new recipe information being selected by a recipe selection in order to carry out a further preparation operation as a function of the preparation record (110).

7. The method (100) according to any one of the preceding claims,
**characterized in that**
a first time characteristic (107.1) of the control parameter is detected in accordance with step a) and recorded in accordance with step c), and/or a second time characteristic (107.2) of the result parameter is detected in accordance with step a) and recorded in accordance with step c).

8. The method (100) according to any one of the preceding claims,
**characterized in that**
the control parameter comprises at least one of the following parameters:
- a temperature at the food processor (10), preferably of a heating element (53),
- a speed on the food processor (10), preferably a mixer (51),
- a preparation time for an individual preparation step in the preparation operation,
- a quantity and/or quality of the prepared foodstuff,
- a speed on the food processor (10), preferably the agitator (51).

9. The method (100) according to any one of the preceding claims,
**characterized in that**
at least two result values (106.2) are determined in accordance with step b) by the second detection (105.2) of respectively different result parameters, a first result parameter preferably being detected by a first sensor (52.1) and a second result parameter being detected by a second sensor (52.2) on the food processor (10) and/or the environment of the food processor (10).

10. The method (100) according to any one of the preceding claims,
**characterized in that**
the selection of the result parameters and/or control parameters to be recorded are stored in a parameter template, and the first and second recording (105.1, 105.2) is carried out as a function of the parameter template, the parameter template preferably being read out as a function of the recipe.

11. Food processor (10) with at least one processing device (50) and a monitoring device (200), wherein
in a preparation operation, the processing device (50) can be controlled for at least partially automatic preparation of foodstuffs, and
the monitoring device (200) comprises at least two sensors (52), and
at least one control value (106.1) can be determined by a first sensor (52.1) by a first detection (105.1) of at least one control parameter on the food processor (10), and
at least one result value (106.2) can be determined by at least one second sensor (52.2) by a second detection (105.2) of at least one result parameter on the food processor (10),
**characterized in that**
the monitoring device (200) comprises a data storage unit (220), by means of which the control value (106.1) and the result value (106.2) can be stored in a preparation record (110), so that this can be assigned to the preparation as a recorded preparation.

12. Food processor (10) according to claim 11,
**characterized in that**
an input device (27) of the food processor (10) is provided, in particular a control panel (26) and/or a rotary control (26), which comprises the second and/or a third sensor (52.2, 52.3), wherein preferably the result parameter comprises at least one of the following parameters:
- a temperature, especially on the prepared foodstuff,
- visual information about the prepared foodstuff,
- a weight of the prepared foodstuff,
- a physical variable on the food processor (10),
- a quality parameter of the prepared foodstuff,
- a parameter on the food processor (10) that is dependent on the preparation, preferably a motor current of a motor (31) for a mixer (51) of the food processor (10),
- a user input, in particular a manual termination of a preparation step and/or the preparation mode.

13. The food processor (10) according to any one of claims 11 or 12,
**characterized in that**
the food processor (10) is operable according to a method (100) according to any one of claims 1 to 10.

14. A computer program product for operating a food processor (10), in particular according to any one of claims 11 to 13,
**characterized in that**
the computer program product is adapted to perform a method (100) according to any one of claims 1 to 10.

15. Use of a food processor (10) according to any one of claims 11 to 13 for recording an at least partially automatic preparation of at least one foodstuff.

## Revendications

1. Procédé (100) pour faire fonctionner un robot ménager (10), dans lequel, dans un opération de préparation, au moins un dispositif de traitement (50) du robot ménager (10) est commandé pour la préparation au moins partiellement automatique d'au moins un aliment,
**caractérisé par les étapes suivantes :**
a) détermination d'au moins une valeur de commande (106.1) par une première détection (105.1) d'au moins un paramètre de commande pendant l'opération de préparation, le paramètre de commande étant spécifique à la préparation,
b) détermination d'au moins une valeur de résultat (106.2) par une deuxième détection (105.2) d'au moins un paramètre de résultat, le paramètre de résultat étant spécifique au résultat de la préparation,
c) l'enregistrement de la valeur de commande (106.1) et de la valeur de résultat (106.2) dans un enregistrement de préparation (110) de sorte qu'elles soient associées à la préparation en tant que préparation enregistrée.

2. Procédé (100) selon la revendication 1,
**caractérisé en ce qu'**
au moins les étapes suivantes sont effectuées selon l'étape c) :
d) évaluer l'enregistrement de préparation (110), en particulier lorsqu'une autre opération de préparation est initiée pour une autre préparation, en particulier lorsqu'une sélection de recette est effectuée,
e) émission d'au moins un signal de commande (161) pour influencer la suite de la préparation en fonction de l'évaluation, de sorte que la suite de la préparation est adaptée à l'enregistrement de préparation (110), de préférence de telle sorte que le résultat de la préparation enregistrée est reproduit.

3. Procédé (100) selon la revendication 1 ou 2,
**caractérisé en ce que**
la valeur de commande enregistrée (106.1) et/ou la valeur de résultat enregistrée (106.2) est associée à au moins une étape de préparation dans l'opération de préparation, où
une adaptation au moins partiellement automatique de l'étape de préparation associée, en particulier d'une durée de préparation, de préférence d'une durée d'agitation, et/ou du ou d'un autre paramètre de commande, a lieu dans un autre opération de préparation à l'aide de l'enregistrement de préparation (110)
et/ou **en ce que**, pour initier le, en particulier au moins un autre, opération de préparation, une sélection de recette est effectuée, et une adaptation de l'opération de préparation à l'aide de l'enregistrement de préparation (110) n'a lieu que si une sélection de recette prédéfinie par l'enregistrement de préparation (110) pour la préparation enregistrée correspond à la sélection de recette effectuée.

4. Procédé (100) selon l'une quelconque des revendications précédentes,
**caractérisé en ce que**
pendant au moins une autre opération de préparation, en particulier lors d'une sélection de recette correspondante, une surveillance des paramètres de résultat et/ou des paramètres de commande est effectuée pour déterminer des valeurs de surveillance, les valeurs de surveillance étant comparées aux valeurs de l'enregistrement de préparation (110), en particulier correspondant, et une autre préparation étant adaptée dans l'autre opération de préparation à l'aide de la comparaison, de sorte que l'autre préparation est adaptée à la préparation enregistrée
et/ou **en ce qu'**une information de recette est sélectionnée par une sélection de recette, laquelle comprend au moins une étape de préparation pour la préparation dans le opération de préparation, la sélection de recette s'effectuant de préférence en dehors de l'opération de préparation, l'information de recette comprenant de préférence des données sur le type et/ou la quantité et/ou la qualité de l'au moins un aliment à préparer.

5. Procédé (100) selon l'une quelconque des revendications précédentes,
**caractérisé en ce que**
pendant au moins une autre opération de préparation, en particulier lors d'une sélection de recette correspondante, une surveillance des paramètres de résultat et/ou des paramètres de commande est effectuée pour déterminer des valeurs de surveillance, les valeurs de surveillance étant comparées aux valeurs de l'enregistrement de préparation (110), en particulier correspondant, et l'enregistrement de préparation (110) étant adapté à l'aide de la comparaison, de sorte qu'en particulier l'enregistrement de préparation (110) est adapté à la préparation suivante, en particulier uniquement lorsqu'un paramètre de qualité du résultat de la préparation suivante dépasse un paramètre de qualité enregistré du résultat de la préparation enregistrée.

6. Procédé (100) selon l'une quelconque des revendications précédentes,
**caractérisé en ce que**
l'enregistrement de préparation (110) est complété par des informations sur au moins une étape de préparation et/ou sur le au moins un aliment utilisé lors de la préparation enregistrée, de sorte qu'une nouvelle information de recette est établie, la nouvelle information de recette étant sélectionnée par une sélection de recette pour effectuer une autre opération de préparation en fonction de l'enregistrement de préparation (110).

7. Procédé (100) selon l'une quelconque des revendications précédentes,
**caractérisé en ce que**
selon l'étape a), une première évolution temporelle (107.1) du paramètre de commande est saisie et enregistrée selon l'étape c), et/ou selon l'étape a), une deuxième évolution temporelle (107.2) du paramètre de résultat est saisie et enregistrée selon l'étape c).

8. Procédé (100) selon l'une quelconque des revendications précédentes,
**caractérisé en ce que**
le paramètre de commande comprend au moins l'un des paramètres suivants :
- une température au niveau du robot ménager (10), de préférence d'un élément chauffant (53),
- une vitesse sur le robot ménager (10), de préférence d'un agitateur (51),
- une durée temporelle de préparation d'une étape individuelle de la préparation dans l'établissement de préparation,
- une quantité et/ou une qualité de la denrée alimentaire préparée,
- une vitesse de rotation sur le robot ménager (10), de préférence sur l'agitateur (51).

9. Procédé (100) selon l'une quelconque des revendications précédentes,
**caractérisé en ce que**
selon l'étape b), au moins deux valeurs de résultat (106.2) sont déterminées par la deuxième détection (105.2) de paramètres de résultat respectivement différents, un premier paramètre de résultat étant de préférence détecté par un premier capteur (52.1) et un deuxième paramètre de résultat étant détecté par un deuxième capteur (52.2) sur le robot ménager (10) et/ou l'environnement du robot ménager (10).

10. Procédé (100) selon l'une quelconque des revendications précédentes,
**caractérisé en ce que**
la sélection des paramètres de résultat et/ou des paramètres de commande à saisir sont mémorisés dans un modèle de paramètres, et la première et la deuxième détection (105.1, 105.2) sont effectuées en fonction du modèle de paramètres, le modèle de paramètres étant lu de préférence en fonction de la recette.

11. Robot ménager (10) comprenant au moins un dispositif de traitement (50) et un dispositif de surveillance (200), dans lequel
dans un opération de préparation, le dispositif de traitement (50) peut être commandé pour la préparation au moins partiellement automatique d'aliments, et
le dispositif de surveillance (200) comprend au moins deux capteurs (52), et
au moins une valeur de commande (106.1) peut être déterminée par un premier capteur (52.1) par une première détection (105.1) d'au moins un paramètre de commande sur le robot ménager (10), et
au moins un deuxième capteur (52.2) permet de déterminer au moins une valeur de résultat (106.2) par une deuxième détection (105.2) d'au moins un paramètre de résultat sur le robot ménager (10),
**caractérisé en ce que**
le dispositif de surveillance (200) comprend une unité de stockage de données (220) par laquelle la valeur de commande (106.1) et la valeur de résultat (106.2) peuvent être stockées dans un enregistrement de préparation (110), de sorte que celui-ci peut être associé à la préparation en tant que préparation enregistrée.

12. Robot ménager (10) selon la revendication 11,
**caractérisé en ce qu'**
il est prévu un dispositif de saisie (27) du robot ménager (10), en particulier un panneau de commande (26) et/ou un régulateur rotatif (26), qui comprend le deuxième et/ou un troisième capteur (52.2, 52.3), le paramètre de résultat comprenant de préférence au moins l'un des paramètres suivants :
- une température, notamment sur l'aliment préparé,
- une information visuelle de l'aliment préparé,
- un poids de l'aliment préparé,
- une grandeur physique sur le robot ménager (10),
- un paramètre de qualité de la denrée alimentaire préparée,
- un paramètre dépendant de la préparation sur le robot ménager (10), de préférence un courant de moteur d'un moteur (31) pour un agitateur (51) du robot ménager (10),
- une entrée utilisateur, en particulier une fin manuelle d'une étape de préparation et/ou de l'opération de préparation.

13. Robot ménager (10) selon l'une des revendications 11 ou 12,
**caractérisé en ce que**
le robot ménager (10) peut être exploité selon un procédé (100) selon l'une des revendications 1 à 10.

14. Produit programme d'ordinateur pour faire fonctionner un robot ménager (10), notamment selon l'une des revendications 11 à 13,
**caractérisé en ce que**
le produit programme d'ordinateur est adapté pour mettre en oeuvre un procédé (100) selon l'une quelconque des revendications 1 à 10.

15. Utilisation d'un robot ménager(10) selon l'une des revendications 11 à 13 pour enregistrer une préparation au moins partiellement automatique d'au moins un aliment.
